(19)

Europäisches
Patentamt
European
Patent Office
Office européen
des brevets

(11) **EP 3 817 510 A1**

(12) **EUROPEAN PATENT APPLICATION**

(43) Date of publication:
**05.05.2021 Bulletin 2021/18**

(51) Int Cl.:
*H05B 3/26* (2006.01)     *B01B 1/00* (2006.01)
*F24H 1/50* (2006.01)

(21) Application number: **20204936.7**

(22) Date of filing: **30.10.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2019 JP 2019198981**

(71) Applicant: **CANON KABUSHIKI KAISHA**
**Ohta-ku**
**Tokyo 146-8501 (JP)**

(72) Inventors:
- **IMANAKA, Yoshiyuki**
  **Tokyo 146-8501 (JP)**
- **NAKAYAMA, Takahiro**
  **Tokyo 146-8501 (JP)**
- **KUBOTA, Masahiko**
  **Tokyo 146-8501 (JP)**
- **YAMAMOTO, Akira**
  **Tokyo 146-8501 (JP)**

- **YAMADA, Akitoshi**
  **Tokyo 146-8501 (JP)**
- **YANAI, Yumi**
  **Tokyo 146-8501 (JP)**
- **ISHINAGA, Hiroyuki**
  **Tokyo 146-8501 (JP)**
- **OZAKI, Teruo**
  **Tokyo 146-8501 (JP)**
- **KASHINO, Toshio**
  **Tokyo 146-8501 (JP)**
- **ARAI, Hiroki**
  **Tokyo 146-8501 (JP)**
- **HIROBE, Kazuki**
  **Tokyo 146-8501 (JP)**
- **NISHIKAWA, Yukinori**
  **Tokyo 146-8501 (JP)**
- **OKITA, Hisao**
  **Tokyo 146-8501 (JP)**
- **KOMANO, Yusuke**
  **Tokyo 146-8501 (JP)**

(74) Representative: **WESER & Kollegen**
**Patentanwälte PartmbB**
**Radeckestraße 43**
**81245 München (DE)**

(54) **ULTRAFINE BUBBLE GENERATING APPARATUS AND CONTROLLING METHOD THEREOF**

(57)     A thermal-ultrafine bubble generation unit (300) generates thermal-ultrafine bubbles (11) by bringing a liquid (W) into film boiling. The thermal-ultrafine bubble generation unit includes a temperature detection element (1610) that detects generation of the film boiling.

**FIG.16A**

**Description**

BACKGROUND OF THE INVENTION

Field of the Invention

The present invention relates to an ultrafine bubble generating apparatus that generates ultrafine bubbles with diameters below 1.0 $\mu$m, and to a controlling method thereof.

Description of the Related Art

Recently, there have been developed techniques for applying the features of fine bubbles such as microbubbles in micrometer-size in diameter and nanobubbles in nanometer-size in diameter. Especially, the utility of ultrafine bubbles (hereinafter also referred to as "UFBs") smaller than 1.0 $\mu$m in diameter have been confirmed in various fields.
Japanese Patent Laid-Open No. 2019-42732 (hereinafter referred to as Reference 1) discloses an apparatus that generates the UFBs by bringing a liquid into film boiling with a heater.
According to the method disclosed in Reference 1, a rapid and strong pressure is generated in the vicinity of the heater in the case where film boiling bubbles disappear. This may shorten the product life of the heater. The drive of the heater needs to be controlled efficiently and effectively in order to generate the UFBs in large quantity at low cost.

SUMMARY OF THE INVENTION

The present invention in its first aspect provides an ultrafine bubble generating apparatus as specified in claims 1 to 13.
The present invention in its second aspect provides a control method as specified in claim 14.
Further features of the present invention will become apparent from the following description of exemplary embodiments with reference to the attached drawings.

BRIEF DESCRIPTION OF THE DRAWINGS

Fig. 1 is a diagram illustrating an example of a UFB generating apparatus;
Fig. 2 is a schematic configuration diagram of a pre-processing unit;
Figs. 3A and 3B are a schematic configuration diagram of a dissolving unit and a diagram for describing the dissolving states in a liquid;
Fig. 4 is a schematic configuration diagram of a T-UFB generating unit;
Figs. 5A and 5B are diagrams for describing details of a heating element;
Figs. 6A and 6B are diagrams for describing the states of film boiling on the heating element;
Figs. 7A to 7D are diagrams illustrating the states of generation of UFBs caused by expansion of a film boiling bubble;
Figs. 8A to 8C are diagrams illustrating the states of generation of UFBs caused by shrinkage of the film boiling bubble;
Figs. 9A to 9C are diagrams illustrating the states of generation of UFBs caused by reheating of the liquid;
Figs. 10A and 10B are diagrams illustrating the states of generation of UFBs caused by shock waves made by disappearance of the bubble generated by the film boiling;
Figs. 11A to 11C are diagrams illustrating configuration examples of a post-processing unit;
Figs. 12A and 12B are diagrams describing layouts of an element substrate;
Figs. 13A and 13B are diagrams illustrating electrical equivalent circuits;
Figs. 14A to 14C are diagrams describing an example of reducing a difference between wiring resistance losses;
Figs. 15A to 15D are graphs depicting a relation between time of application of the voltage pulse to the heater and a change in temperature in the vicinity of the heater;
Figs. 16A and 16B are diagrams illustrating a cross-section in the vicinity of a heater;
Figs. 17A and 17B are diagrams illustrating an example of an element substrate 12;
Figs. 18A and 18B are diagrams illustrating a configuration of the T-UFB generating unit and a timing chart applicable thereto;
Figs. 19A to 19D are diagrams illustrating more configurations of the T-UFB generating unit;
Figs. 20A and 20B are diagrams describing heaters to be selected;
Fig. 21 is a diagram describing a heater selection circuit;
Figs. 22A and 22B are diagrams illustrating examples of control circuits for switches that control currents flowing through respective heaters;
Figs. 23A and 23B are diagrams illustrating states of configurations of the control circuits;
Fig. 24 is a diagram illustrating a timing chart;
Fig. 25A and 25B are diagrams illustrating states of the configurations of the control circuits;
Fig. 26 is a diagram illustrating a timing chart;
Fig. 27 is a diagram illustrating a configuration to drive a heating unit;
Figs. 28A to 28D are timing charts describing modes of driving the heaters; and
Fig. 29 is a diagram illustrating an example of a semiconductor substrate.

DESCRIPTION OF THE EMBODIMENTS

«Configuration of UFB Generating Apparatus»

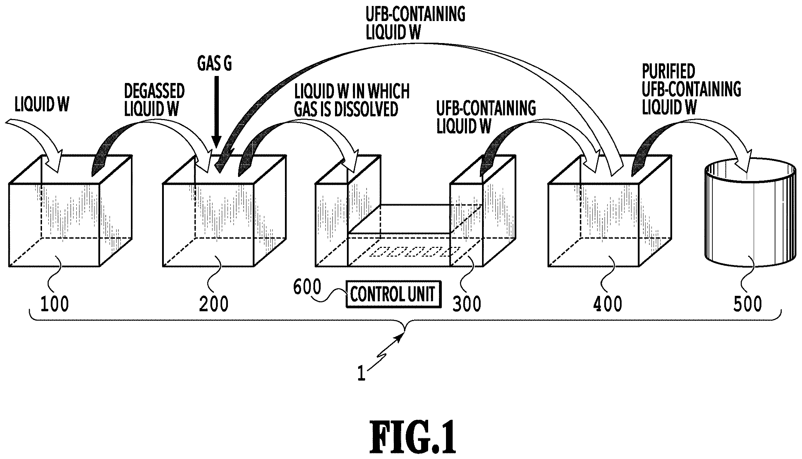

Fig. 1 is a diagram illustrating an example of an ultrafine bubble generating apparatus (UFB generating apparatus) applicable to the present invention. A UFB generating apparatus 1 of this embodiment includes a pre-processing unit 100, dissolving unit 200, a T-UFB generating unit 300, a post-processing unit 400, a collecting unit 500 and a control unit 600. The control unit 600 controls each operation of each unit. Each unit performs unique processing on a liquid W such as tap water supplied to the pre-processing unit 100 in the above order, and the thus-processed liquid W is collected as a T-UFB-containing liquid by the collecting unit 500. Functions and configurations of the units are described below. Although details are described later, UFBs generated by utilizing the film boiling caused by rapid heating are referred to as thermal-ultrafine bubbles (T-UFBs) in this specification.

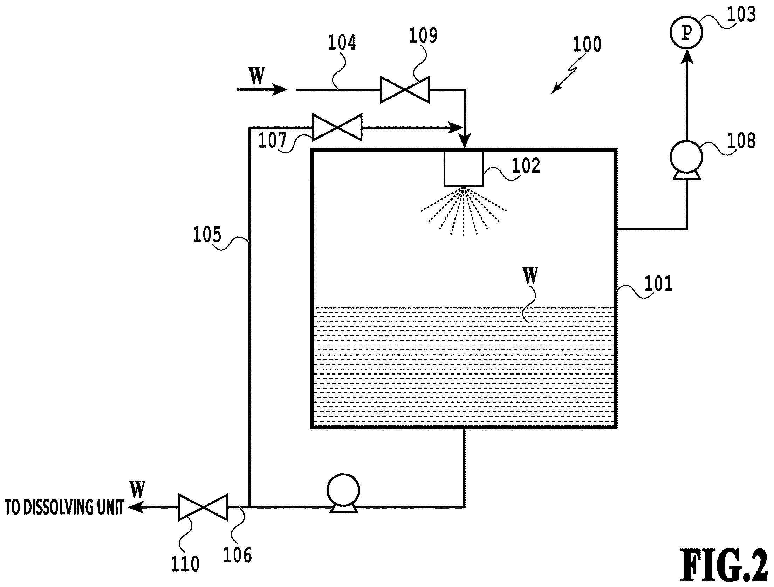

Fig. 2 is a schematic configuration diagram of the pre-processing unit 100. The pre-processing unit 100 of this embodiment performs a degassing treatment on the supplied liquid W. The pre-processing unit 100 mainly includes a degassing container 101, a shower head 102, a depressurizing pump 103, a liquid introduction passage 104, a liquid circulation passage 105, and a liquid discharge passage 106. For example, the liquid W such as tap water is supplied to the degassing container 101 from the liquid introduction passage 104 through a valve 109. In this process, the shower head 102 provided in the degassing container 101 sprays a mist of the liquid W in the degassing container 101. The shower head 102 is for prompting the gasification of the liquid W; however, a centrifugal and the like may be used instead as the mechanism for producing the gasification prompt effect.
When a certain amount of the liquid W is reserved in the degassing container 101 and then the depressurizing pump 103 is activated with all the valves closed, already-gasified gas components are discharged, and gasification and discharge of gas components dissolved in the liquid W are also prompted. In this process, the internal pressure of the degassing container 101 may be depressurized to around several hundreds to thousands of Pa (1.0 Torr to 10.0 Torr) while checking a manometer 108. The gases to be removed by the pre-processing unit 100 includes nitrogen, oxygen, argon, carbon dioxide, and so on, for example.
The above-described degassing processing can be repeatedly performed on the same liquid W by utilizing the liquid circulation passage 105. Specifically, the shower head 102 is operated with the valve 109 of the liquid introduction passage 104 and a valve 110 of the liquid discharge passage 106 closed and a valve 107 of the liquid circulation passage 105 opened. This allows the liquid W reserved in the degassing container 101 and degassed once to be resprayed in the degassing container 101 from the shower head 102. In addition, with the depressurizing pump 103 operated, the gasification processing by the shower head 102 and the degassing processing by the depressurizing pump 103 are repeatedly performed on the same liquid W. Every time the above processing utilizing the liquid circulation passage 105 is performed repeatedly, it is possible to decrease the gas components contained in the liquid W in stages. Once the liquid W degassed to a desired purity is obtained, the liquid W is transferred to the dissolving unit 200 through the liquid discharge passage 106 with the valve 110 opened.
Fig. 2 illustrates the pre-processing 100 that depressurizes the gas part to gasify the solute; however, the method of degassing the solution is not limited thereto. For example, a heating and boiling method for boiling the liquid W to gasify the solute may be employed, or a film degassing method for increasing the interface between the liquid and the gas using hollow fibers. A SEPAREL series (produced by DIC corporation) is commercially supplied as the degassing module using the hollow fibers. The SEPAREL series uses poly(4-methylpentene-1) (PMP) for the raw material of the hollow fibers and is used for removing air bubbles from ink and the like mainly supplied for a piezo head. In addition, two or more of an evacuating method, the heating and boiling method, and the film degassing method may be used together.

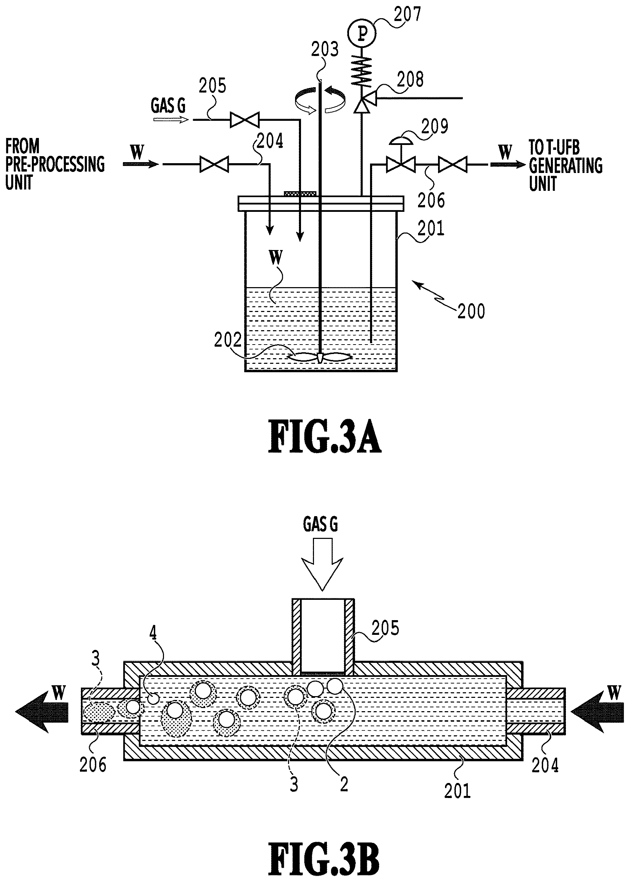

Figs. 3A and 3B are a schematic configuration diagram of the dissolving unit 200 and a diagram for describing the dissolving states in the liquid. The dissolving unit 200 is a unit for dissolving a desired gas into the liquid W supplied from the pre-processing unit 100. The dissolving unit 200 of this embodiment mainly includes a dissolving container 201, a rotation shaft 203 provided with a rotation plate 202, a liquid introduction passage 204, a gas introduction passage 205, a liquid discharge passage 206, and a pressurizing pump 207.

The liquid W supplied from the pre-processing unit 100 is supplied and reserved into the dissolving container 201 through the liquid introduction passage 204. Meanwhile, a gas G is supplied to the dissolving container 201 through the gas introduction passage 205.

Once predetermined amounts of the liquid W and the gas G are reserved in the dissolving container 201, the pressurizing pump 207 is activated to increase the internal pressure of the dissolving container 201 to about 0.5 MPa. A safety valve 208 is arranged between the pressurizing pump 207 and the dissolving container 201. With the rotation plate 202 in the liquid rotated via the rotation shaft 203, the gas G supplied to the dissolving container 201 is transformed into air bubbles, and the contact area between the gas G and the liquid W is increased to prompt the dissolution into the liquid W. This operation is continued until the solubility of the gas G reaches almost the maximum saturation solubility. In this case, a unit for decreasing the temperature of the liquid may be provided to dissolve the gas as much as possible. When the gas is with low solubility, it is also possible to increase the internal pressure of the dissolving container 201 to 0.5 MPa or higher. In this case, the material and the like of the container need to be the optimum for safety sake.

Once the liquid W in which the components of the gas G are dissolved at a desired concentration is obtained, the liquid W is discharged through the liquid discharge passage 206 and supplied to the T-UFB generating unit 300. In this process, a back-pressure valve 209 adjusts the flow pressure of the liquid W to prevent excessive increase of the pressure during the supplying.

Fig. 3B is a diagram schematically illustrating the dissolving states of the gas G put in the dissolving container 201. An air bubble 2 containing the components of the gas G put in the liquid W is dissolved from a portion in contact with the liquid W. The air bubble 2 thus shrinks gradually, and a gas-dissolved liquid 3 then appears around the air bubble 2. Since the air bubble 2 is affected by the buoyancy, the air bubble 2 may be moved to a position away from the center of the gas-dissolved liquid 3 or be separated out from the gas-dissolved liquid 3 to become a residual air bubble 4. Specifically, in the liquid W to be supplied to the T-UFB generating unit 300 through the liquid discharge passage 206, there is a mix of the air bubbles 2 surrounded by the gas-dissolved liquids 3 and the air bubbles 2 and the gas-dissolved liquids 3 separated from each other.

The gas-dissolved liquid 3 in the drawings means "a region of the liquid W in which the dissolution concentration of the gas G mixed therein is relatively high." In the gas components actually dissolved in the liquid W, the concentration of the gas components in the gas-dissolved liquid 3 is the highest at a portion surrounding the air bubble 2. In a case where the gas-dissolved liquid 3 is separated from the air bubble 2 the concentration of the gas components of the gas-dissolved liquid 3 is the highest at the center of the region, and the concentration is continuously decreased as away from the center. That is, although the region of the gas-dissolved liquid 3 is surrounded by a broken line in Fig. 3 for the sake of explanation, such a clear boundary does not actually exist. In addition, in the present discloser, a gas that cannot be dissolved completely may be accepted to exist in the form of an air bubble in the liquid.

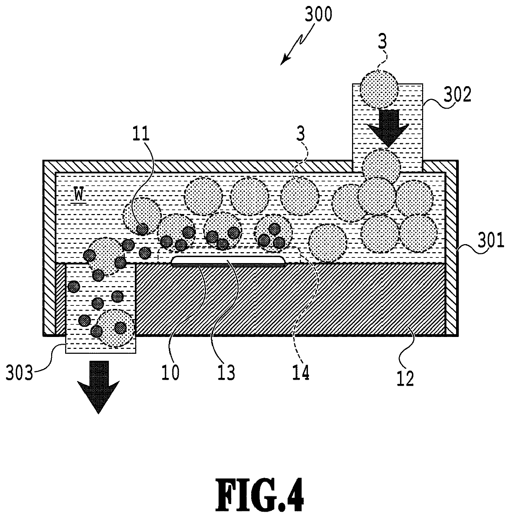

Fig. 4 is a schematic configuration diagram of the T-UFB generating unit 300. The T-UFB generating unit 300 mainly includes a chamber 301, a liquid introduction passage 302, and a liquid discharge passage 303. The flow from the liquid introduction passage 302 to the liquid discharge passage 303 through the chamber 301 is formed by a not-illustrated flow pump. Various pumps including a diaphragm pump, a gear pump, and a screw pump may be employed as the flow pump. In in the liquid W introduced from the liquid introduction passage 302, the gas-dissolved liquid 3 of the gas G put by the dissolving unit 200 is mixed.

An element substrate 12 provided with a heating element 10 is arranged on a bottom section of the chamber 301. With a predetermined voltage pulse applied to the heating element 10, a bubble 13 generated by the film boiling (hereinafter, also referred to as a film boiling bubble 13) is generated in a region in contact with the heating element 10. Then, an ultrafine bubble (UFB) 11 containing the gas G is generated caused by expansion and shrinkage of the film boiling bubble 13. As a result, a UFB-containing liquid W containing many UFBs 11 is discharged from the liquid discharge passage 303.

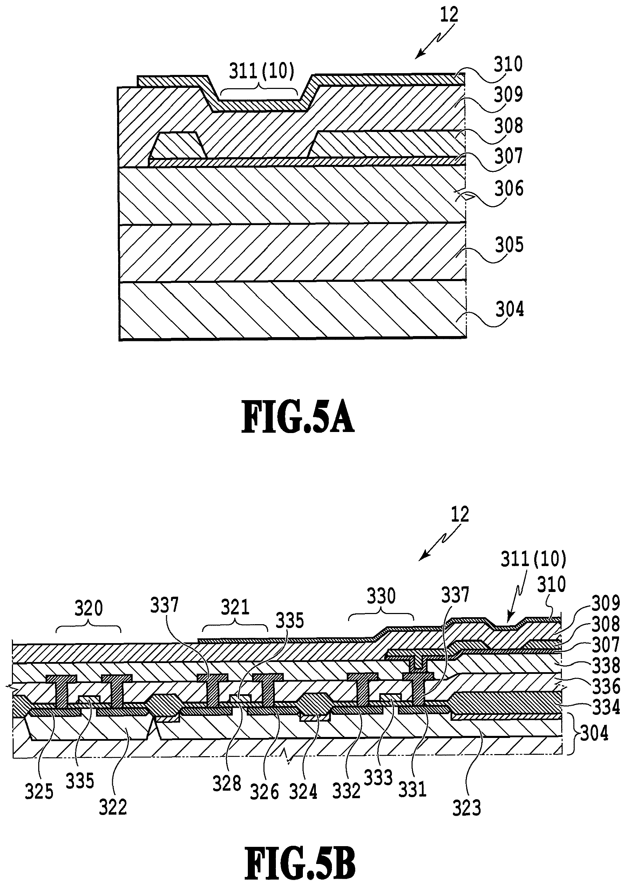

Figs. 5A and 5B are diagrams for illustrating a detailed configuration of the heating element 10. Fig. 5A illustrates a closeup view of the heating element 10, and Fig. 5B illustrates a cross-sectional view of a wider region of the element substrate 12 including the heating element 10.

As illustrated in Fig. 5A, in the element substrate 12 of this embodiment, a thermal oxide film 305 as a heat-accumulating layer and an interlaminar film 306 also served as a heat-accumulating layer are laminated on a surface of a silicon substrate 304. An $SiO_2$ film or an SiN film may be used as the interlaminar film 306. A resistive layer 307 is formed on a surface of the interlaminar film 306, and a wiring 308 is partially formed on a surface of the resistive layer 307. An Al-alloy wiring of Al, Al-Si, Al-Cu, or the like may be used as the wiring 308. A protective layer 309 made of an $SiO_2$ film or an $Si_3N_4$ film is formed on surfaces of the wiring 308, the resistive layer 307, and the interlaminar film 306.

A cavitation-resistant film 310 for protecting the protective layer 309 from chemical and physical impacts due to the heat evolved by the resistive layer 307 is formed on a portion and around the portion on the surface of the protective layer 309, the portion corresponding to a heat-acting portion 311 that eventually becomes the heating element 10. A region on the surface of the resistive layer 307 in which the wiring 308 is not formed is the heat-acting portion 311 in which the resistive layer 307 evolves heat. The heating portion of the resistive layer 307 on which the wiring 308 is not formed functions as the heating element (heater) 10. As described above, the layers in the element substrate 12 are sequentially formed on the surface of the silicon substrate 304 by a semiconductor production technique, and the heat-acting portion 311 is thus provided on the silicon substrate 304.

The configuration illustrated in the drawings is an example, and various other configurations are applicable. For example, a configuration in which the laminating order of the resistive layer 307 and the wiring 308 is opposite, and a configuration in which an electrode is connected to a lower surface of the resistive layer 307 (so-called a plug electrode configuration) are applicable. In other words, as described later, any configuration may be applied as long as the configuration allows the heat-acting portion 311 to heat the liquid for generating the film boiling in the liquid.

Fig. 5B is an example of a cross-sectional view of a region including a circuit connected to the wiring 308 in the element substrate 12. An N-type well region 322 and a P-type well region 323 are partially provided in a top layer of the silicon substrate 304, which is a P-type conductor. AP-MOS 320 is formed in the N-type well region 322 and an N-MOS 321 is formed in the P-type well region 323 by introduction and diffusion of impurities by the ion implantation and the like in the general MOS process.

The P-MOS 320 includes a source region 325 and a drain region 326 formed by partial introduction of N-type or P-type impurities in a top layer of the N-type well region 322, a gate wiring 335, and so on. The gate wiring 335 is deposited on a part of a top surface of the N-type well region 322 excluding the source region 325 and the drain region 326, with a gate insulation film 328 of several hundreds of Å in thickness interposed between the gate wiring 335 and the top surface of the N-type well region 322.

The N-MOS 321 includes the source region 325 and the drain region 326 formed by partial introduction of N-type or P-type impurities in a top layer of the P-type well region 323, the gate wiring 335, and so on. The gate wiring 335 is deposited on a part of a top surface of the P-type well region 323 excluding the source region 325 and the drain region 326, with the gate insulation film 328 of several hundreds of Å in thickness interposed between the gate wiring 335 and the top surface of the P-type well region 323. The gate wiring 335 is made of polysilicon of 3000 Å to 5000 Å in thickness deposited by the CVD method. A C-MOS logic is constructed with the P-MOS 320 and the N-MOS 321.

In the P-type well region 323, an N-MOS transistor 330 for driving an electrothermal conversion element (heating resistance element) is formed on a portion different from the portion including the N-MOS 321. The N-MOS transistor 330 includes a source region 332 and a drain region 331 partially provided in the top layer of the P-type well region 323 by the steps of introduction and diffusion of impurities, a gate wiring 333, and so on. The gate wiring 333 is deposited on a part of the top surface of the P-type well region 323 excluding the source region 332 and the drain region 331, with the gate insulation film 328 interposed between the gate wiring 333 and the top surface of the P-type well region 323.

In this example, the N-MOS transistor 330 is used as the transistor for driving the electrothermal conversion element. However, the transistor for driving is not limited to the N-MOS transistor 330, and any transistor may be used as long as the transistor has a capability of driving multiple electrothermal conversion elements individually and can implement the above-described fine configuration. Although the electrothermal conversion element and the transistor for driving the electrothermal conversion element are formed on the same substrate in this example, those may be formed on different substrates separately.

An oxide film separation region 324 is formed by field oxidation of 5000 Å to 10000 Å in thickness between the elements, such as between the P-MOS 320 and the N-MOS 321 and between the N-MOS 321 and the N-MOS transistor 330. The oxide film separation region 324 separates the elements. A portion of the oxide film separation region 324 corresponding to the heat-acting portion 311 functions as a heat-accumulating layer 334, which is the first layer on the silicon substrate 304.

An interlayer insulation film 336 including a PSG film, a BPSG film, or the like of about 7000 Å in thickness is formed by the CVD method on each surface of the elements such as the P-MOS 320, the N-MOS 321, and the N-MOS transistor 330. After the interlayer insulation film 336 is made flat by heat treatment, an Al electrode 337 as a first wiring layer is formed in a contact hole penetrating through the interlayer insulation film 336 and the gate insulation film 328. On surfaces of the interlayer insulation film 336 and the Al electrode 337, an interlayer insulation film 338 including an $SiO_2$ film of 10000 Å to 15000 Å in thickness is formed by a plasma CVD method. On the surface of the interlayer insulation film 338, a resistive layer 307 including a TaSiN film of about 500 Å in thickness is formed by a co-sputter method on portions corresponding to the heat-acting portion 311 and the N-MOS transistor 330. The resistive layer 307 is electrically connected with the Al electrode 337 near the drain region 331 via a through-hole formed in the interlayer insulation film 338. On the surface of the resistive layer 307, the wiring 308 of Al as a second wiring layer for a wiring to each electrothermal conversion element is formed. The protective layer 309 on the surfaces of the wiring 308, the resistive layer 307, and the interlayer insulation film 338 includes an SiN film of 3000 Å in thickness formed by the plasma CVD method. The cavitation-resistant film 310 deposited on the surface of the protective layer 309 includes a thin film of about 2000 Å in thickness, which is at least one metal selected from the group consisting of Ta, Fe, Ni, Cr, Ge, Ru, Zr, Ir, and the like. Various materials other than the above-described TaSiN such as $TaN_{0.8}$, CrSiN, TaAl, WSiN, and the like can be applied as long as the material can generate the film boiling in the liquid.

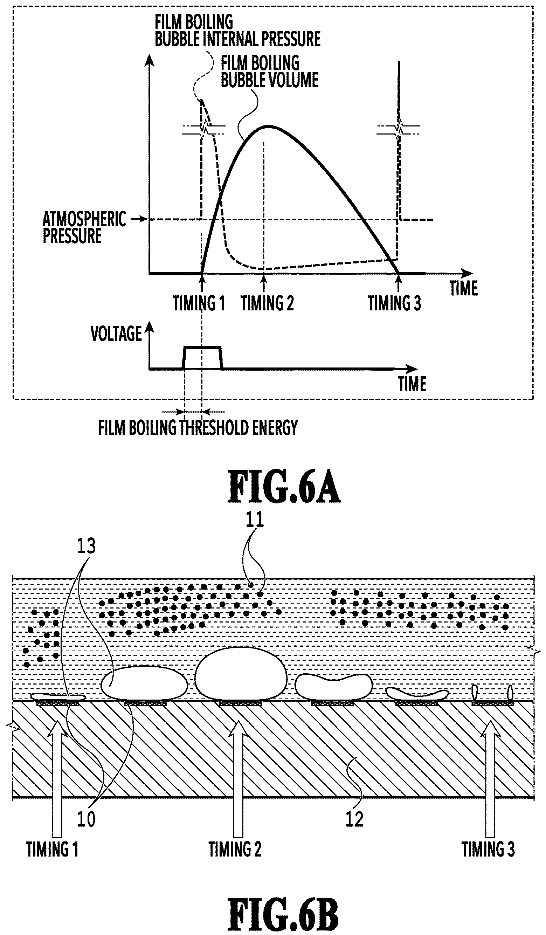

Figs. 6A and 6B are diagrams illustrating the states of the film boiling when a predetermined voltage pulse is applied to the heating element 10. In this case, the case of generating the film boiling under atmospheric pressure is described. In Fig. 6A, the horizontal axis represents time. The vertical axis in the lower graph represents a voltage applied to the heating element 10, and the vertical axis in the upper graph represents the volume and the internal pressure of the film boiling bubble 13 generated by the film boiling. On the other hand, Fig. 6B illustrates the states of the film boiling bubble 13 in association with timings 1 to 3 shown in Fig. 6A. Each of the states is described below in chronological order. The UFBs 11 generated by the film boiling as described later are mainly generated near a surface of the film boiling bubble 13. The states illustrated in Fig. 6B are the states where the UFBs 11 generated by the generating unit 300 are resupplied to the dissolving unit 200 through the circulation route, and the liquid containing the UFBs 11 is resupplied to the liquid passage of the generating unit 300, as illustrated in Fig. 1.

Before a voltage is applied to the heating element 10, the atmospheric pressure is substantially maintained in the chamber 301. Once a voltage is applied to the heating element 10, the film boiling is generated in the liquid in contact with the heating element 10, and a thus-generated air bubble (hereinafter, referred to as the film boiling bubble 13) is expanded by a high pressure acting from inside (timing 1). A bubbling pressure in this process is expected to be around 8 to 10 MPa, which is a value close to a saturation vapor pressure of water.

The time for applying a voltage (pulse width) is around 0.5 $\mu$sec to 10.0 $\mu$sec, and the film boiling bubble 13 is expanded by the inertia of the pressure obtained in timing 1 even after the voltage application. However, a negative pressure generated with the expansion is gradually increased inside the film boiling bubble 13, and the negative pressure acts in a direction to shrink the film boiling bubble 13. After a while, the volume of the film boiling bubble 13 becomes the maximum in timing 2 when the inertial force and the negative pressure are balanced, and thereafter the film boiling bubble 13 shrinks rapidly by the negative pressure.

In the disappearance of the film boiling bubble 13, the film boiling bubble 13 disappears not in the entire surface of the heating element 10 but in one or more extremely small regions. For this reason, on the heating element 10, further greater force than that in the bubbling in timing 1 is generated in the extremely small region in which the film boiling bubble 13 disappears (timing 3).

The generation, expansion, shrinkage, and disappearance of the film boiling bubble 13 as described above are repeated every time a voltage pulse is applied to the heating element 10, and new UFBs 11 are generated each time.

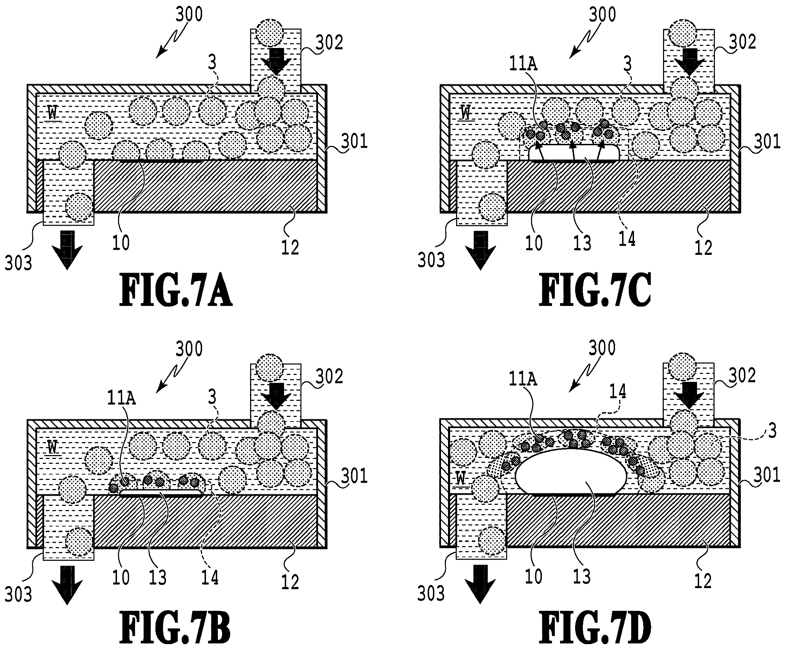

The states of generation of the UFBs 11 in each process of the generation, expansion, shrinkage, and disappearance of the film boiling bubble 13 are further described in detail with reference to Figs. 7A to 10B.

Figs. 7A to 7D are diagrams schematically illustrating the states of generation of the UFBs 11 caused by the generation and the expansion of the film boiling bubble 13. Fig. 7A illustrates the state before the application of a voltage pulse to the heating element 10. The liquid W in which the gas-dissolved liquids 3 are mixed flows inside the chamber 301.

Fig. 7B illustrates the state where a voltage is applied to the heating element 10, and the film boiling bubble 13 is evenly generated in almost all over the region of the heating element 10 in contact with the liquid W. When a voltage is applied, the surface temperature of the heating element 10 rapidly increases at a speed of 10°C/$\mu$sec. The film boiling occurs at a time point when the temperature reaches almost 300°C, and the film boiling bubble 13 is thus generated.

Thereafter, the surface temperature of the heating element 10 keeps increasing to around 600 to 800°C during the pulse application, and the liquid around the film boiling bubble 13 is rapidly heated as well. In Fig. 7B, a region of the liquid that is around the film boiling bubble 13 and to be rapidly heated is indicated as a not-yet-bubbling high temperature region 14. The gas-dissolved liquid 3 within the not-yet-bubbling high temperature region 14 exceeds the thermal dissolution limit and is vaporized to become the UFB. The thus-vaporized air bubbles have diameters of around 10 nm to 100 nm and large gas-liquid interface energy. Thus, the air bubbles float independently in the liquid W without disappearing in a short time. In this embodiment, the air bubbles generated by the thermal action from the generation to the expansion of the film boiling bubble 13 are called first UFBs 11A.

Fig. 7C illustrates the state where the film boiling bubble 13 is expanded. Even after the voltage pulse application to the heating element 10, the film boiling bubble 13 continues expansion by the inertia of the force obtained from the generation thereof, and the not-yet-bubbling high temperature region 14 is also moved and spread by the inertia. Specifically, in the process of the expansion of the film boiling bubble 13, the gas-dissolved liquid 3 within the not-yet-bubbling high temperature region 14 is vaporized as a new air bubble and becomes the first UFB 11A.

Fig. 7D illustrates the state where the film boiling bubble 13 has the maximum volume. As the film boiling bubble 13 is expanded by the inertia, the negative pressure inside the film boiling bubble 13 is gradually increased along with the expansion, and the negative pressure acts to shrink the film boiling bubble 13. At a time point when the negative pressure and the inertial force are balanced, the volume of the film boiling bubble 13 becomes the maximum, and then the shrinkage is started.

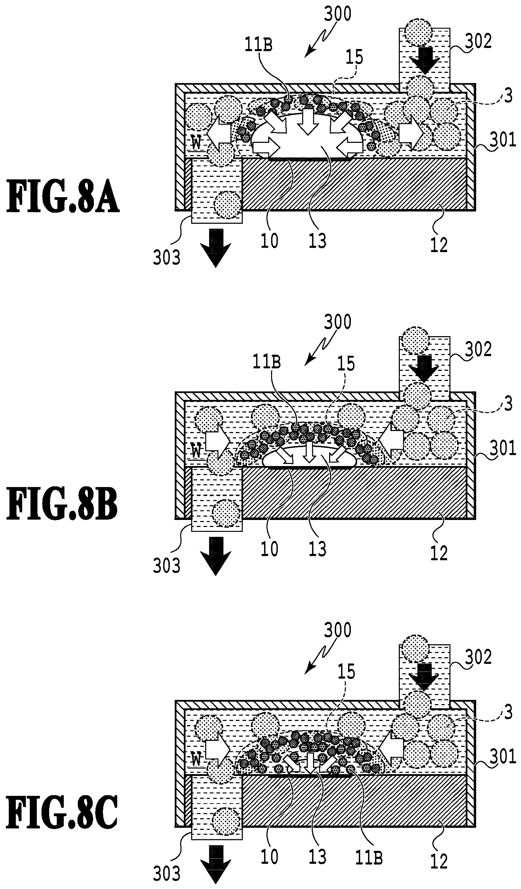

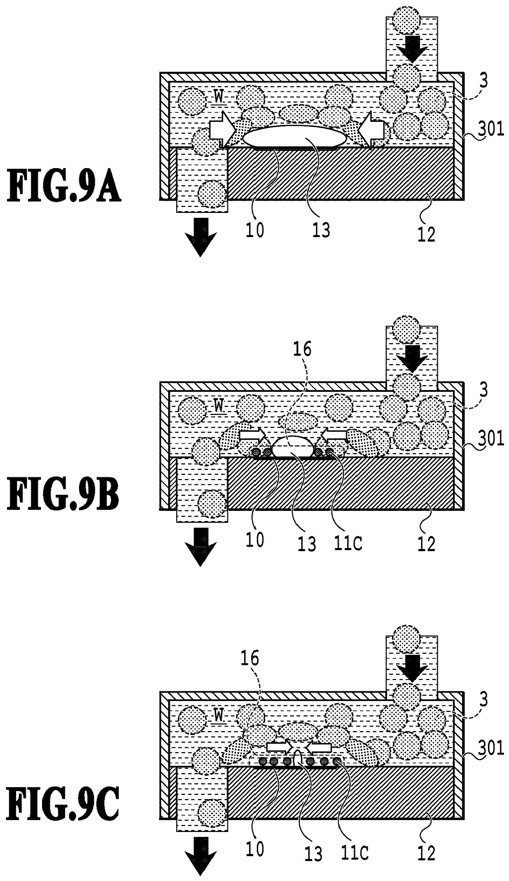

In the shrinking stage of the film boiling bubble 13, there are UFBs generated by the processes illustrated in Figs. 8A to 8C (second UFBs 11B) and UFBs generated by the processes illustrated in Figs. 9A to 9C (third UFBs 11C). It is considered that these two processes are made simultaneously.

Figs. 8A to 8C are diagrams illustrating the states of generation of the UFBs 11 caused by the shrinkage of the film boiling bubble 13. Fig. 8A illustrates the state where the film boiling bubble 13 starts shrinking. Although the film boiling bubble 13 starts shrinking, the surrounding liquid W still has the inertial force in the expansion direction. Because of this, the inertial force acting in the direction of going away from the heating element 10 and the force going toward the heating element 10 caused by the shrinkage of the film boiling bubble 13 act in a surrounding region extremely close to the film boiling bubble 13, and the region is depressurized. The region is indicated in the drawings as a not-yet-bubbling negative pressure region 15.

The gas-dissolved liquid 3 within the not-yet-bubbling negative pressure region 15 exceeds the pressure dissolution limit and is vaporized to become an air bubble. The thus-vaporized air bubbles have diameters of about 100 nm and thereafter float independently in the liquid W without disappearing in a short time. In this embodiment, the air bubbles vaporized by the pressure action during the shrinkage of the film boiling bubble 13 are called the second UFBs 11B.

Fig. 8B illustrates a process of the shrinkage of the film boiling bubble 13. The shrinking speed of the film boiling bubble 13 is accelerated by the negative pressure, and the not-yet-bubbling negative pressure region 15 is also moved along with the shrinkage of the film boiling bubble 13. Specifically, in the process of the shrinkage of the film boiling bubble 13, the gas-dissolved liquids 3 within a part over the not-yet-bubbling negative pressure region 15 are precipitated one after another and become the second UFBs 11B.

Fig. 8C illustrates the state immediately before the disappearance of the film boiling bubble 13. Although the moving speed of the surrounding liquid W is also increased by the accelerated shrinkage of the film boiling bubble 13, a pressure loss occurs due to a flow passage resistance in the chamber 301. As a result, the region occupied by the not-yet-bubbling negative pressure region 15 is further increased, and a number of the second UFBs 11B are generated.

Figs. 9A to 9C are diagrams illustrating the states of generation of the UFBs by reheating of the liquid W during the shrinkage of the film boiling bubble 13. Fig. 9A illustrates the state where the surface of the heating element 10 is covered with the shrinking film boiling bubble 13.

Fig. 9B illustrates the state where the shrinkage of the film boiling bubble 13 has progressed, and a part of the surface of the heating element 10 comes in contact with the liquid W. In this state, there is heat left on the surface of the heating element 10, but the heat is not high enough to cause the film boiling even if the liquid W comes in contact with the surface. A region of the liquid to be heated by coming in contact with the surface of the heating element 10 is indicated in the drawings as a not-yet-bubbling reheated region 16. Although the film boiling is not made, the gas-dissolved liquid 3 within the not-yet-bubbling reheated region 16 exceeds the thermal dissolution limit and is vaporized. In this embodiment, the air bubbles generated by the reheating of the liquid W during the shrinkage of the film boiling bubble 13 are called the third UFBs 11C.

Fig. 9C illustrates the state where the shrinkage of the film boiling bubble 13 has further progressed. The smaller the film boiling bubble 13, the greater the region of the heating element 10 in contact with the liquid W, and the third UFBs 11C are generated until the film boiling bubble 13 disappears.

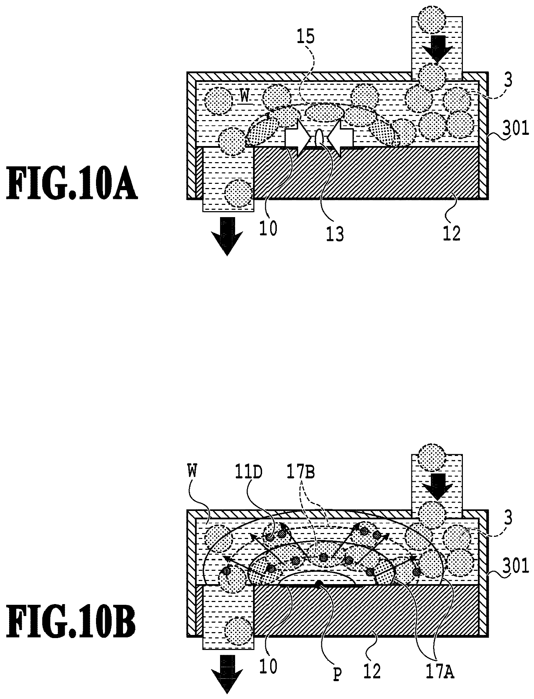

Figs. 10A and 10B are diagrams illustrating the states of generation of the UFBs caused by an impact from the disappearance of the film boiling bubble 13 generated by the film boiling (that is, a type of cavitation). Fig. 10A illustrates the state immediately before the disappearance of the film boiling bubble 13. In this state, the film boiling bubble 13 shrinks rapidly by the internal negative pressure, and the not-yet-bubbling negative pressure region 15 surrounds the film boiling bubble 13.

Fig. 10B illustrates the state immediately after the film boiling bubble 13 disappears at a point P. When the film boiling bubble 13 disappears, acoustic waves ripple concentrically from the point P as a starting point due to the impact of the disappearance. The acoustic wave is a collective term of an elastic wave that is propagated through anything regardless of gas, liquid, and solid. In this embodiment, compression waves of the liquid W, which are a high pressure surface 17A and a low pressure surface 17B of the liquid W, are propagated alternately.

In this case, the gas-dissolved liquid 3 within the not-yet-bubbling negative pressure region 15 is resonated by the shock waves made by the disappearance of the film boiling bubble 13, and the gas-dissolved liquid 3 exceeds the pressure dissolution limit and the phase transition is made in timing when the low pressure surface 17B passes therethrough. Specifically, a number of air bubbles are vaporized in the not-yet-bubbling negative pressure region 15 simultaneously with the disappearance of the film boiling bubble 13. In this embodiment, the air bubbles generated by the shock waves made by the disappearance of the film boiling bubble 13 are called fourth UFBs 11D.

The fourth UFBs 11D generated by the shock waves made by the disappearance of the film boiling bubble 13 suddenly appear in an extremely short time (1 $\mu$S or less) in an extremely narrow thin film-shaped region. The diameter is sufficiently smaller than that of the first to third UFBs, and the gas-liquid interface energy is higher than that of the first to third UFBs. For this reason, it is considered that the fourth UFBs 11D have different characteristics from the first to third UFBs 11A to 11C and generate different effects.

Additionally, the fourth UFBs 11D are evenly generated in many parts of the region of the concentric sphere in which the shock waves are propagated, and the fourth UFBs 11D evenly exist in the chamber 301 from the generation thereof. Although many first to third UFBs already exist in the timing of the generation of the fourth UFBs 11D, the presence of the first to third UFBs does not affect the generation of the fourth UFBs 11D greatly. It is also considered that the first to third UFBs do not disappear due to the generation of the fourth UFBs 11D.

As described above, it is expected that the UFBs 11 are generated in the multiple stages from the generation to the disappearance of the film boiling bubble 13 by the heat generation of the heating element 10. The first UFBs 11A, the second UFBs 11B, and the third UFBs 11C are generated near the surface of the film boiling bubble generated by the film boiling. In this case, near means a region within about 20 $\mu$m from the surface of the film boiling bubble. The fourth UFBs 11D are generated in a region through which the shock waves are propagated when the air bubble disappears. Although the above example illustrates the stages to the disappearance of the film boiling bubble 13, the way of generating the UFBs is not limited thereto. For example, with the generated film boiling bubble 13 communicating with the atmospheric air before the bubble disappearance, the UFBs can be generated also if the film boiling bubble 13 does not reach the disappearance.

Next, remaining properties of the UFBs are described. The higher the temperature of the liquid, the lower the dissolution properties of the gas components, and the lower the temperature, the higher the dissolution properties of the gas components. In other words, the phase transition of the dissolved gas components is prompted and the generation of the UFBs becomes easier as the temperature of the liquid is higher. The temperature of the liquid and the solubility of the gas are in the inverse relationship, and the gas exceeding the saturation solubility is transformed into air bubbles and appeared in the liquid as the liquid temperature increases.

Therefore, when the temperature of the liquid rapidly increases from normal temperature, the dissolution properties are decreased without stopping, and the generation of the UFBs starts. The thermal dissolution properties are decreased as the temperature increases, and a number of the UFBs are generated.

Conversely, when the temperature of the liquid decreases from normal temperature, the dissolution properties of the gas are increased, and the generated UFBs are more likely to be liquefied. However, such temperature is sufficiently lower than normal temperature. Additionally, since the once generated UFBs have a high internal pressure and large gas-liquid interface energy even when the temperature of the liquid decreases, it is highly unlikely that there is exerted a sufficiently high pressure to break such a gas-liquid interface. In other words, the once generated UFBs do not disappear easily as long as the liquid is stored at normal temperature and normal pressure.

In this embodiment, the first UFBs 11A described with Figs. 7A to 7C and the third UFBs 11C described with Figs. 9A to 9C can be described as UFBs that are generated by utilizing such thermal dissolution properties of gas.

On the other hand, in the relationship between the pressure and the dissolution properties of liquid, the higher the pressure of the liquid, the higher the dissolution properties of the gas, and the lower the pressure, the lower the dissolution properties. In other words, the phase transition to the gas of the gas-dissolved liquid dissolved in the liquid is prompted and the generation of the UFBs becomes easier as the pressure of the liquid is lower. Once the pressure of the liquid becomes lower than normal pressure, the dissolution properties are decreased instantly, and the generation of the UFBs starts. The pressure dissolution properties are decreased as the pressure decreases, and a number of the UFBs are generated.

Conversely, when the pressure of the liquid increases to be higher than normal pressure, the dissolution properties of the gas are increased, and the generated UFBs are more likely to be liquefied. However, such pressure is sufficiently higher than the atmospheric pressure. Additionally, since the once generated UFBs have a high internal pressure and large gas-liquid interface energy even when the pressure of the liquid increases, it is highly unlikely that there is exerted a sufficiently high pressure to break such a gas-liquid interface. In other words, the once generated UFBs do not disappear easily as long as the liquid is stored at normal temperature and normal pressure.

In this embodiment, the second UFBs 11B described with Figs. 8A to 8C and the fourth UFBs 11D described with Figs. 10A to 10B can be described as UFBs that are generated by utilizing such pressure dissolution properties of gas.

Those first to fourth UFBs generated by different causes are described individually above; however, the above-described generation causes occur simultaneously with the event of the film boiling. Thus, at least two types of the first to the fourth UFBs may be generated at the same time, and these generation causes may cooperate to generate the UFBs. It should be noted that it is common for all the generation causes to be induced by the film boiling phenomenon. In this specification, the method of generating the UFBs by utilizing the film boiling caused by the rapid heating as described above is referred to as a thermal-ultrafine bubble (T-UFB) generating method. Additionally, the UFBs generated by the T-UFB generating method are referred to as T-UFBs, and the liquid containing the T-UFBs generated by the T-UFB generating method is referred to as a T-UFB-containing liquid.

Almost all the air bubbles generated by the T-UFB generating method are 1.0 $\mu$m or less, and milli-bubbles and microbubbles are unlikely to be generated. That is, the T-UFB generating method allows dominant and efficient generation of the UFBs. Additionally, the T-UFBs generated by the T-UFB generating method have larger gas-liquid interface energy than that of the UFBs generated by a conventional method, and the T-UFBs do not disappear easily as long as being stored at normal temperature and normal pressure. Moreover, even if new T-UFBs are generated by new film boiling, it is possible to prevent disappearance of the already generated T-UFBs due to the impact from the new generation. That is, it can be said that the number and the concentration of the T-UFBs contained in the T-UFB-containing liquid have the hysteresis properties depending on the number of times the film boiling is made in the T-UFB-containing liquid. In other words, it is possible to adjust the concentration of the T-UFBs contained in the T-UFB-containing liquid by controlling the number of the heating elements provided in the T-UFB generating unit 300 and the number of the voltage pulse application to the heating elements.

Reference to Fig. 1 is made again. Once the T-UFB-containing liquid W with a desired UFB concentration is generated in the T-UFB generating unit 300, the UFB-containing liquid W is supplied to the post-processing unit 400.

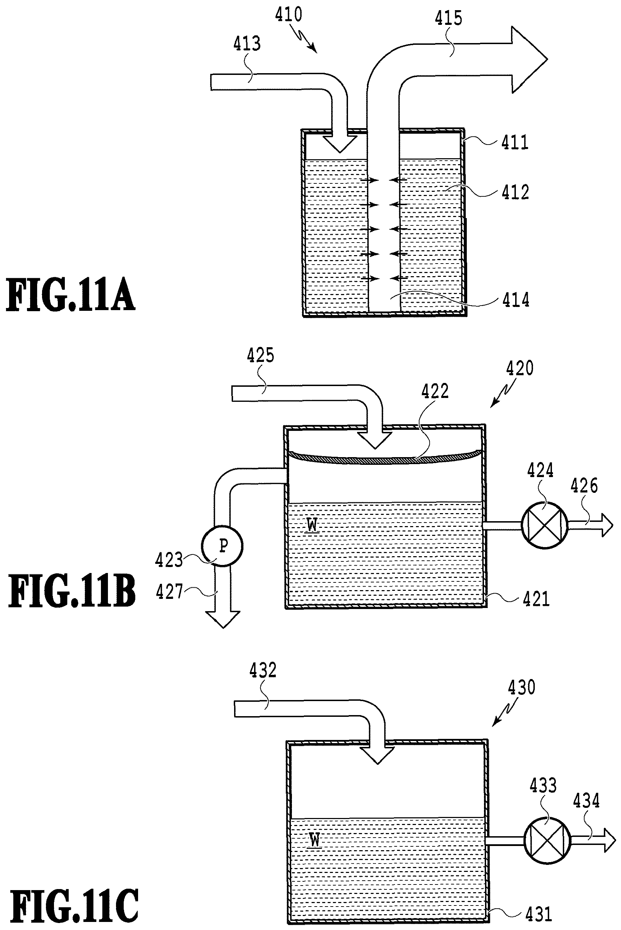

Figs. 11A to 11C are diagrams illustrating configuration examples of the post-processing unit 400 of this embodiment. The post-processing unit 400 of this embodiment removes impurities in the UFB-containing liquid W in stages in the order from inorganic ions, organic substances, and insoluble solid substances.

Fig. 11A illustrates a first post-processing mechanism 410 that removes the inorganic ions. The first post-processing mechanism 410 includes an exchange container 411, cation exchange resins 412, a liquid introduction passage 413, a collecting pipe 414, and a liquid discharge passage 415. The exchange container 411 stores the cation exchange resins 412. The UFB-containing liquid W generated by the T-UFB generating unit 300 is injected to the exchange container 411 through the liquid introduction passage 413 and absorbed into the cation exchange resins 412 such that the cations as the impurities are removed. Such impurities include metal materials peeled off from the element substrate 12 of the T-UFB generating unit 300, such as $SiO_2$, $SiN$, $SiC$, $Ta$, $Al_2O_3$, $Ta_2O_5$, and $Ir$.

The cation exchange resins 412 are synthetic resins in which a functional group (ion exchange group) is introduced in a high polymer matrix having a three-dimensional network, and the appearance of the synthetic resins are spherical particles of around 0.4 to 0.7 mm. A general high polymer matrix is the styrene-divinylbenzene copolymer, and the functional group may be that of methacrylic acid series and acrylic acid series, for example. However, the above material is an example. As long as the material can remove desired inorganic ions effectively, the above material can be changed to various materials. The UFB-containing liquid W absorbed in the cation exchange resins 412 to remove the inorganic ions is collected by the collecting pipe 414 and transferred to the next step through the liquid discharge passage 415. In this process in the present embodiment, not all the inorganic ions contained in the UFB-containing liquid W supplied from the liquid introduction passage 413 need to be removed as long as at least a part of the inorganic ions are removed.

Fig. 11B illustrates a second post-processing mechanism 420 that removes the organic substances. The second post-processing mechanism 420 includes a storage container 421, a filtration filter 422, a vacuum pump 423, a valve 424, a liquid introduction passage 425, a liquid discharge passage 426, and an air suction passage 427. Inside of the storage container 421 is divided into upper and lower two regions by the filtration filter 422. The liquid introduction passage 425 is connected to the upper region of the upper and lower two regions, and the air suction passage 427 and the liquid discharge passage 426 are connected to the lower region thereof. Once the vacuum pump 423 is driven with the valve 424 closed, the air in the storage container 421 is discharged through the air suction passage 427 to make the pressure inside the storage container 421 negative pressure, and the UFB-containing liquid W is thereafter introduced from the liquid introduction passage 425. Then, the UFB-containing liquid W from which the impurities are removed by the filtration filter 422 is reserved into the storage container 421.

The impurities removed by the filtration filter 422 include organic materials that may be mixed at a tube or each unit, such as organic compounds including silicon, siloxane, and epoxy, for example. A filter film usable for the filtration filter 422 includes a filter of a sub-$\mu$m-mesh (a filter of 1 $\mu$m or smaller in mesh diameter) that can remove bacteria, and a filter of a nm-mesh that can remove virus. The filtration filter having such a fine opening diameter may remove air bubbles larger than the opening diameter of the filter. Particularly, there may be the case where the filter is clogged by the fine air bubbles adsorbed to the openings (mesh) of the filter, which may slowdown the filtering speed. However, as described above, most of the air bubbles generated by the T-UFB generating method described in the present embodiment of the invention are in the size of 1 $\mu$m or smaller in diameter, and milli-bubbles and microbubbles are not likely to be generated. That is, since the probability of generating milli-bubbles and microbubbles is extremely low, it is possible to suppress the slowdown in the filtering speed due to the adsorption of the air bubbles to the filter. For this reason, it is favorable to apply the filtration filter 422 provided with the filter of 1 $\mu$m or smaller in mesh diameter to the system having the T-UFB generating method.

Examples of the filtration applicable to this embodiment may be a so-called dead-end filtration and cross-flow filtration. In the dead-end filtration, the direction of the flow of the supplied liquid and the direction of the flow of the filtration liquid passing through the filter openings are the same, and specifically, the directions of the flows are made along with each other. In contrast, in the cross-flow filtration, the supplied liquid flows in a direction along a filter surface, and specifically, the direction of the flow of the supplied liquid and the direction of the flow of the filtration liquid passing through the filter openings are crossed with each other. It is preferable to apply the cross-flow filtration to suppress the adsorption of the air bubbles to the filter openings.

After a certain amount of the UFB-containing liquid W is reserved in the storage container 421, the vacuum pump 423 is stopped and the valve 424 is opened to transfer the T-UFB-containing liquid in the storage container 421 to the next step through the liquid discharge passage 426. Although the vacuum filtration method is employed as the method of removing the organic impurities herein, a gravity filtration method and a pressurized filtration can also be employed as the filtration method using a filter, for example.

Fig. 11C illustrates a third post-processing mechanism 430 that removes the insoluble solid substances. The third post-processing mechanism 430 includes a precipitation container 431, a liquid introduction passage 432, a valve 433, and a liquid discharge passage 434.

First, a predetermined amount of the UFB-containing liquid W is reserved into the precipitation container 431 through the liquid introduction passage 432 with the valve 433 closed, and leaving it for a while. Meanwhile, the solid substances in the UFB-containing liquid W are precipitated onto the bottom of the precipitation container 431 by gravity. Among the bubbles in the UFB-containing liquid, relatively large bubbles such as microbubbles are raised to the liquid surface by the buoyancy and also removed from the UFB-containing liquid. After a lapse of sufficient time, the valve 433 is opened, and the UFB-containing liquid W from which the solid substances and large bubbles are removed is transferred to the collecting unit 500 through the liquid discharge passage 434. The example of applying the three post-processing mechanisms in sequence is shown in this embodiment; however, it is not limited thereto, and the order of the three post-processing mechanisms may be changed, or at least one needed post-processing mechanism may be employed.

Reference to Fig. 1 is made again. The T-UFB-containing liquid W from which the impurities are removed by the post-processing unit 400 may be directly transferred to the collecting unit 500 or may be put back to the dissolving unit 200 again. In the latter case, the gas dissolution concentration of the T-UFB-containing liquid W that is decreased due to the generation of the T-UFBs can be compensated to the saturated state again by the dissolving unit 200. If new T-UFBs are generated by the T-UFB generating unit 300 after the compensation, it is possible to further increase the concentration of the UFBs contained in the T-UFB-containing liquid with the above-described properties. That is, it is possible to increase the concentration of the contained UFBs by the number of circulations through the dissolving unit 200, the T-UFB generating unit 300, and the post-processing unit 400, and it is possible to transfer the UFB-containing liquid W to the collecting unit 500 after a predetermined concentration of the contained UFBs is obtained. This embodiment shows a form in which the UFB-containing liquid processed by the post-processing unit 400 is put back to the dissolving unit 200 and circulated; however, it is not limited thereto, and the UFB-containing liquid after passing through the T-UFB generating unit may be put back again to the dissolving unit 200 before being supplied to the post-processing unit 400 such that the post-processing is performed by the post-processing unit 400 after the T-UFB concentration is increased through multiple times of circulation, for example.

The collecting unit 500 collects and preserves the UFB-containing liquid W transferred from the post-processing unit 400. The T-UFB-containing liquid collected by the collecting unit 500 is a UFB-containing liquid with high purity from which various impurities are removed.

In the collecting unit 500, the UFB-containing liquid W may be classified by the size of the T-UFBs by performing some stages of filtration processing. Since it is expected that the temperature of the T-UFB-containing liquid W obtained by the T-UFB method is higher than normal temperature, the collecting unit 500 may be provided with a cooling unit. The cooling unit may be provided to a part of the post-processing unit 400.

The schematic description of the UFB generating apparatus 1 is given above; however, it is needless to say that the illustrated multiple units can be changed, and not all of them need to be prepared. Depending on the type of the liquid W and the gas G to be used and the intended use of the T-UFB-containing liquid to be generated, a part of the above-described units may be omitted, or another unit other than the above-described units may be added.

For example, when the gas to be contained by the UFBs is the atmospheric air, the degassing unit as the pre-processing unit 100 and the dissolving unit 200 can be omitted. On the other hand, when multiple kinds of gases are desired to be contained by the UFBs, another dissolving unit 200 may be added.

The units for removing the impurities as described in Figs. 11A to 11C may be provided upstream of the T-UFB generating unit 300 or may be provided both upstream and downstream thereof. When the liquid to be supplied to the UFB generating apparatus is tap water, rain water, contaminated water, or the like, there may be included organic and inorganic impurities in the liquid. If such a liquid W including the impurities is supplied to the T-UFB generating unit 300, there is a risk of deteriorating the heating element 10 and inducing the salting-out phenomenon. With the mechanisms as illustrated in Figs. 11A to 11C provided upstream of the T-UFB generating unit 300, it is possible to remove the above-described impurities previously.

«Liquid and Gas Usable For T-UFB-Containing Liquid»

Now, the liquid W usable for generating the T-UFB-containing liquid is described. The liquid W usable in this embodiment is, for example, pure water, ion exchange water, distilled water, bioactive water, magnetic active water, lotion, tap water, sea water, river water, clean and sewage water, lake water, underground water, rain water, and so on. A mixed liquid containing the above liquid and the like is also usable. A mixed solvent containing water and soluble organic solvent can be also used. The soluble organic solvent to be used by being mixed with water is not particularly limited; however, the followings can be a specific example thereof. An alkyl alcohol group of the carbon number of 1 to 4 including methyl alcohol, ethyl alcohol, n-propyl alcohol, isopropyl alcohol, n-butyl alcohol, sec-butyl alcohol, and tert-butyl alcohol. An amide group including N-methyl-2-pyrrolidone, 2-pyrrolidone, 1,3-dimethyl-2-imidazolidinone, N,N-dimethylformamide, and N,N-dimethylacetamide. A keton group or a ketoalcohol group including acetone and diacetone alcohol. A cyclic ether group including tetrahydrofuran and dioxane. A glycol group including ethylene glycol, 1,2-propylene glycol, 1,3-propylene glycol, 1,2-butanediol, 1,3-butanediol, 1,4-butanediol, 1,5-pentanediol, 1,2-hexanediol, 1,6-hexanediol, 3-methyl-1,5-pentanediol, diethylene glycol, triethylene glycol, and thiodiglycol. A group of lower alkyl ether of polyhydric alcohol including ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, and triethylene glycol monobutyl ether. A polyalkylene glycol group including polyethylene glycol and polypropylene glycol. A triol group including glycerin, 1,2,6-hexanetriol, and trimethylolpropane. These soluble organic solvents can be used individually, or two or more of them can be used together.

A gas component that can be introduced into the dissolving unit 200 is, for example, hydrogen, helium, oxygen, nitrogen, methane, fluorine, neon, carbon dioxide, ozone, argon, chlorine, ethane, propane, air, and so on. The gas component may be a mixed gas containing some of the above. Additionally, it is not necessary for the dissolving unit 200 to dissolve a substance in a gas state, and the dissolving unit 200 may fuse a liquid or a solid containing desired components into the liquid W. The dissolution in this case may be spontaneous dissolution, dissolution caused by pressure application, or dissolution caused by hydration, ionization, and chemical reaction due to electrolytic dissociation.

«Effects of T-UFB Generating Method»

Next, the characteristics and the effects of the above-described T-UFB generating method are described by comparing with a conventional UFB generating method. For example, in a conventional air bubble generating apparatus as represented by the Venturi method, a mechanical depressurizing structure such as a depressurizing nozzle is provided in a part of a flow passage. A liquid flows at a predetermined pressure to pass through the depressurizing structure, and air bubbles of various sizes are generated in a downstream region of the depressurizing structure.

In this case, among the generated air bubbles, since the relatively large bubbles such as milli-bubbles and microbubbles are affected by the buoyancy, such bubbles rise to the liquid surface and disappear. Even the UFBs that are not affected by the buoyancy may also disappear with the milli-bubbles and microbubbles since the gas-liquid interface energy of the UFBs is not very large. Additionally, even if the above-described depressurizing structures are arranged in series, and the same liquid flows through the depressurizing structures repeatedly, it is impossible to store for a long time the UFBs of the number corresponding to the number of repetitions. In other words, it has been difficult for the UFB-containing liquid generated by the conventional UFB generating method to maintain the concentration of the contained UFBs at a predetermined value for a long time.

In contrast, in the T-UFB generating method of this embodiment utilizing the film boiling, a rapid temperature change from normal temperature to about 300°C and a rapid pressure change from normal pressure to around a several megapascal occur locally in a part extremely close to the heating element. The heating element is a rectangular shape having one side of around several tens to hundreds of $\mu$m. It is around 1/10 to 1/1000 of the size of a conventional UFB generating unit. Additionally, with the gas-dissolved liquid within the extremely thin film region of the film boiling bubble surface exceeding the thermal dissolution limit or the pressure dissolution limit instantaneously (in an extremely short time under microseconds), the phase transition occurs and the gas-dissolved liquid is precipitated as the UFBs. In this case, the relatively large bubbles such as milli-bubbles and microbubbles are hardly generated, and the liquid contains the UFBs of about 100 nm in diameter with extremely high purity. Moreover, since the T-UFBs generated in this way have sufficiently large gas-liquid interface energy, the T-UFBs are not broken easily under the normal environment and can be stored for a long time.

Particularly, the present discloser using the film boiling phenomenon that enables local formation of a gas interface in the liquid can form an interface in a part of the liquid close to the heating element without affecting the entire liquid region, and a region on which the thermal and pressure actions performed can be extremely local. As a result, it is possible to stably generate desired UFBs. With further more conditions for generating the UFBs applied to the generation liquid through the liquid circulation, it is possible to additionally generate new UFBs with small effects on the already-made UFBs. As a result, it is possible to produce a UFB liquid of a desired size and concentration relatively easily.

Moreover, since the T-UFB generating method has the above-described hysteresis properties, it is possible to increase the concentration to a desired concentration while keeping the high purity. In other words, according to the T-UFB generating method, it is possible to efficiently generate a long-time storable UFB-containing liquid with high purity and high concentration.

«Specific Usage of T-UFB-Containing Liquid»

In general, applications of the ultrafine bubble-containing liquids are distinguished by the type of the containing gas. Any type of gas can make the UFBs as long as an amount of around PPM to BPM of the gas can be dissolved in the liquid. For example, the ultrafine bubble-containing liquids can be applied to the following applications.

- A UFB-containing liquid containing air can be preferably applied to cleansing in the industrial, agricultural and fishery, and medical scenes and the like, and to cultivation of plants and agricultural and fishery products.
- A UFB-containing liquid containing ozone can be preferably applied to not only cleansing application in the industrial, agricultural and fishery, and medical scenes and the like, but to also applications intended to disinfection, sterilization, and decontamination, and environmental cleanup of drainage and contaminated soil, for example.
- A UFB-containing liquid containing nitrogen can be preferably applied to not only cleansing application in the industrial, agricultural and fishery, and medical scenes and the like, but to also applications intended to disinfection, sterilization, and decontamination, and environmental cleanup of drainage and contaminated soil, for example.
- A UFB-containing liquid containing oxygen can be preferably applied to cleansing application in the industrial, agricultural and fishery, and medical scenes and the like, and to cultivation of plants and agricultural and fishery products.
- A UFB-containing liquid containing carbon dioxide can be preferably applied to not only cleansing application in the industrial, agricultural and fishery, and medical scenes and the like, but to also applications intended to disinfection, sterilization, and decontamination, for example.
- A UFB-containing liquid containing perfluorocarbons as a medical gas can be preferably applied to ultrasonic diagnosis and treatment. As described above, the UFB-containing liquids can exert the effects in various fields of medical, chemical, dental, food, industrial, agricultural and fishery, and so on.

In each of the applications, the purity and the concentration of the UFBs contained in the UFB-containing liquid are important for quickly and reliably exert the effect of the UFB-containing liquid. In other words, unprecedented effects can be expected in various fields by utilizing the T-UFB generating method of this embodiment that enables generation of the UFB-containing liquid with high purity and desired concentration. Here is below a list of the applications in which the T-UFB generating method and the T-UFB-containing liquid are expected to be preferably applicable.

(A) Liquid Purification Application

- With the T-UFB generating unit provided to a water clarification unit, enhancement of an effect of water clarification and an effect of purification of PH adjustment liquid is expected. The T-UFB generating unit may also be provided to a carbonated water server.
- With the T-UFB generating unit provided to a humidifier, aroma diffuser, coffee maker, and the like, enhancement of a humidifying effect, a deodorant effect, and a scent spreading effect in a room is expected.
- If the UFB-containing liquid in which an ozone gas is dissolved by the dissolving unit is generated and is used for dental treatment, burn treatment, and wound treatment using an endoscope, enhancement of a medical cleansing effect and an antiseptic effect is expected.
- With the T-UFB generating unit provided to a water storage tank of a condominium, enhancement of a water clarification effect and chlorine removing effect of drinking water to be stored for a long time is expected.
- If the T-UFB-containing liquid containing ozone or carbon dioxide is used for brewing process of Japanese sake, shochu, wine, and so on in which the high-temperature pasteurization processing cannot be performed, more efficient pasteurization processing than that with the conventional liquid is expected.
- If the UFB-containing liquid is mixed into the ingredient in a production process of the foods for specified health use and the foods with functional claims, the pasteurization processing is possible, and thus it is possible to provide safe and functional foods without a loss of flavor.
- With the T-UFB generating unit provided to a supplying route of sea water and fresh water for cultivation in a cultivation place of fishery products such as fish and pearl, prompting of spawning and growing of the fishery products is expected.
- With the T-UFB generating unit provided in a purification process of water for food preservation, enhancement of the preservation state of the food is expected.
- With the T-UFB generating unit provided in a bleaching unit for bleaching pool water or underground water, a higher bleaching effect is expected.
- With the T-UFB-containing liquid used for repairing a crack of a concrete member, enhancement of the effect of crack repairment is expected.
- With the T-UFBs contained in liquid fuel for a machine using liquid fuel (such as automobile, vessel, and airplane), enhancement of energy efficiency of the fuel is expected.

(B) Cleansing Application

Recently, the UFB-containing liquids have been receiving attention as cleansing water for removing soils and the like attached to clothing. If the T-UFB generating unit described in the above embodiment is provided to a washing machine, and the UFB-containing liquid with higher purity and better permeability than the conventional liquid is supplied to the washing tub, further enhancement of detergency is expected.

- With the T-UFB generating unit provided to a bath shower and a bedpan washer, not only a cleansing effect on all kinds of animals including human body but also an effect of prompting contamination removal of a water stain and a mold on a bathroom and a bedpan are expected.
- With the T-UFB generating unit provided to a window washer for automobiles, a high-pressure washer for cleansing wall members and the like, a car washer, a dishwasher, a food washer, and the like, further enhancement of the cleansing effects thereof is expected.
- With the T-UFB-containing liquid used for cleansing and maintenance of parts produced in a factory including a burring step after pressing, enhancement of the cleansing effect is expected.
- In production of semiconductor elements, if the T-UFB-containing liquid is used as polishing water for a wafer, enhancement of the polishing effect is expected. Additionally, if the T-UFB-containing liquid is used in a resist removal step, prompting of peeling of resist that is not peeled off easily is enhanced.
- With the T-UFB generating unit is provided to machines for cleansing and decontaminating medical machines such as a medical robot, a dental treatment unit, an organ preservation container, and the like, enhancement of the cleansing effect and the decontamination effect of the machines is expected. The T-UFB generating unit is also applicable to treatment of animals.

(C) Pharmaceutical Application

- If the T-UFB-containing liquid is contained in cosmetics and the like, permeation into subcutaneous cells is prompted, and additives that give bad effects to skin such as preservative and surfactant can be reduced greatly. As a result, it is possible to provide safer and more functional cosmetics.
- If a high concentration nanobubble preparation containing the T-UFBs is used for contrasts for medical examination apparatuses such as a CT and an MRI, reflected light of X-rays and ultrasonic waves can be efficiently used. This makes it possible to capture a more detailed image that is usable for initial diagnosis of a cancer and the like.
- If a high concentration nanobubble water containing the T-UFBs is used for a ultrasonic wave treatment machine called high-intensity focused ultrasound (HIFU), the irradiation power of ultrasonic waves can be reduced, and thus the treatment can be made more non-invasive. Particularly, it is possible to reduce the damage to normal tissues.
- It is possible to create a nanobubble preparation by using high concentration nanobubbles containing the T-UFBs as a source, modifying a phospholipid forming a liposome in a negative electric charge region around the air bubble, and applying various medical substances (such as DNA and RNA) through the phospholipid.
- If a drug containing high concentration nanobubble water made by the T-UFB generation is transferred into a dental canal for regenerative treatment of pulp and dentine, the drug enters deeply a dentinal tubule by the permeation effect of the nanobubble water, and the decontamination effect is prompted. This makes it possible to treat the infected root canal of the pulp safely in a short time.

«Layout of Element Substrate»

As described above, the UFBs 11 are generated by the film boiling generated by applying a predetermined voltage pulse to one heating element (hereinafter referred to as a heater) 10. Therefore, the number of the UFBs 11 generated in a predetermined unit time can be increased by increasing the number of the heaters 10. In order to generate the desired number of the UFBs 11 stably in a short time, it is required to arrange numerous heaters densely to be driven. As an example, there may be considered an embodiment of the UFB generating apparatus 1 in which multiple element substrates 12 each including the multiple heaters 10 arranged thereon are laid out such that 10,000 pieces of the heaters 10 are arranged. In the case of attempting to generate the UFBs 11 in a shorter time, it is required to further increase the number of the heaters 10.

However, it is difficult in some cases to stably generate the UFBs 11 simply by increasing the number of the heaters 10. For example, in the case where the number of the heaters 10 is more than 10,000 pieces, the total currents flowing through those heaters 10 have an enormous value. In addition, the parasitic resistance losses in the wiring for establishing connection to the heaters 10 vary depending on the heaters 10. For this reason, amounts of energy inputted to the heaters 10 significantly vary. As the amounts of energy inputted to the heaters 10 significantly vary, a heater 10 receiving energy in excess of an allowable range may come into being. In the case of arranging a number of the heaters 10 densely on the element substrate 12 so as to stably generate a large amount of the UFBs, the variation of energies inputted to the heaters 10 is required to be maintained within a predetermined range. In the following, a description will be first given of a situation where the energies inputted to the heaters 10 vary.

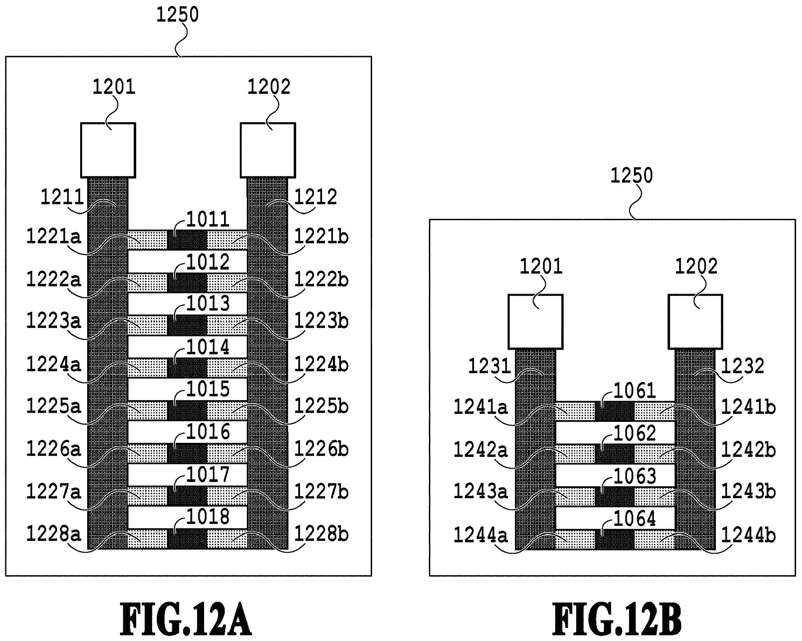

Figs. 12A and 12B are diagrams illustrating examples of a planar layout extracting an element region 1250 (also referred to as a heating part), which is a part of the element substrate 12, and illustrating examples where multiple heaters are provided in each element region 1250. Fig. 12A is an example in which eight heaters 1011 to 1018 are arranged in one element region 1250, and Fig. 12B is an example where four heaters 1061 to 1064 are arranged in one element region 1250. A description will be given below by using the example with the smaller number of the heaters for the sake of convenience.

In Fig. 12A, electrode pads 1201 and 1202 are arranged in the element region 1250 for inputting electric energy to each of the eight heaters 1011 to 1018. In other words, the element region 1250 may be regarded as an aggregate of two or more heaters to which the energy is inputted by the pair of electrode pads. Regions 1221a to 1228a and 1221b to 1228b are individual wiring regions connected one by one to the respective heaters 1011 to 1018. Regions 1211 and 1212 are common wiring regions connecting the multiple individual wiring regions to the electrode pads 1201 and 1202. The heaters 1011 to 1018 used in this embodiment are produced to have substantially the same shape and the same film thickness by means of manufacturing in accordance with the semiconductor photolithography process. That is, the heaters 1011 to 1018 have substantially the same resistance value.

Unless otherwise stated, the heaters 10 generating the UFBs have substantially the same shape and have substantially the same resistance value in the initial state in the following description. Nonetheless, the shapes of the heaters 10 do not always have to be the same shape, and the heaters 10 only need to be configured to suppress the variation in energy. For example, the shapes of the heaters 10 may be different for each element region 1250. Partial changes in shapes of the heaters 10 can be carried out as appropriate by mask designing in the photolithography process.

The currents flow through the common wiring regions 1211 and 1212, the individual wiring regions 1221 to 1228, and the heaters 1011 to 1018 by applying the voltage pulse illustrated in Fig. 6A to the electrode pads 1201 and 1202. Then, the film boiling is generated in the liquid on each of the heaters 1011 to 1018, and the UFBs are thus generated.

In contrast to Fig. 12A, Fig. 12B is an example in which four heaters 1061 to 1064 are arranged in the element region 1250. Regions 1241a to 1244a and 1241b to 1244b are individual wiring regions individually connected to the corresponding heaters 1061 to 1064. Regions 1231 and 1232 are common wiring regions connecting the multiple individual wiring regions to the electrode pads 1201 and 1202.

The inventor has found that the amount of the UFBs generated for each heater in the configuration illustrated in Fig. 12A is different from the amount of the UFBs generated by each heater in the configuration illustrated in Fig. 12B. This is because there is a difference between the amount of energy consumed by each of the heaters 1011 to 1018 in the configuration of Fig. 12A and the amount of energy consumed by each of the heaters 1061 to 1064 in the configuration of Fig. 12B. Specifically, the wiring resistance losses in the common wiring regions 1211, 1212, 1231 and 1232 cause the variation of energies inputted to the heaters, thereby developing the difference in the amount of energy.

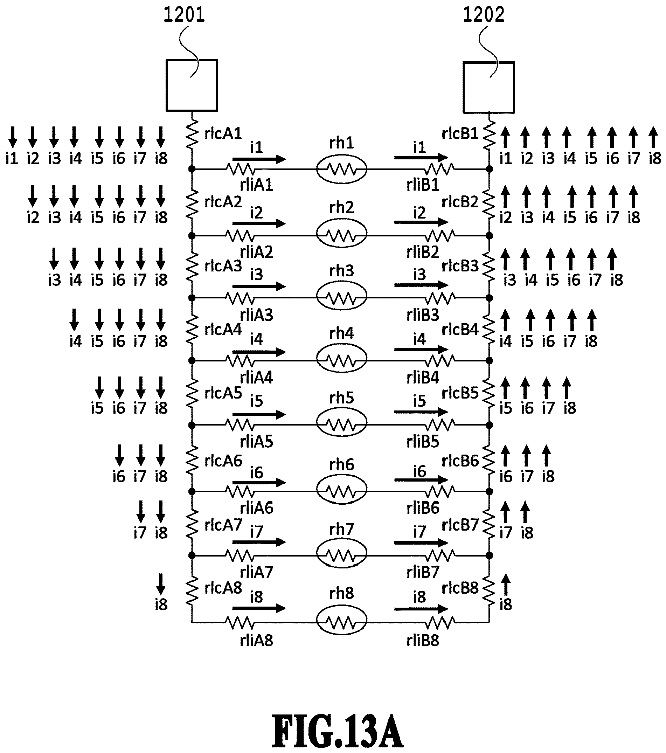

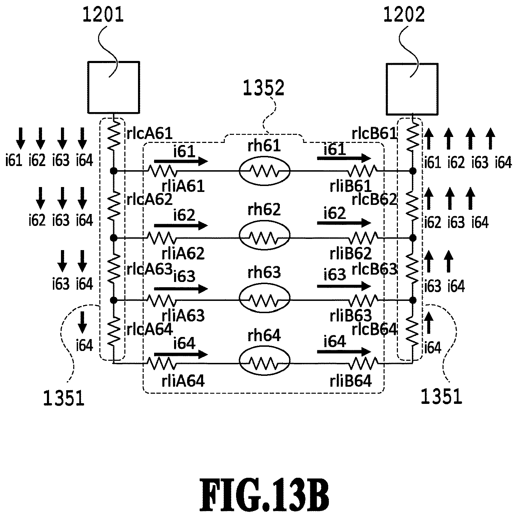

Figs. 13A and 13B are diagrams illustrating electrical equivalent circuits relevant to Figs. 12A and 12B. Fig. 13A corresponds to the configuration in Fig. 12A, and Fig. 13B corresponds to the configuration in Fig. 12B. The variation of energies will be described in detail with reference to Figs. 12A to 13B.

Figs. 13A and 13B are diagrams in which the individual wiring regions and the common wiring regions in Figs. 12A and 12B are replaced with electric wiring resistances, and the heaters are replaced with electric heater resistances. Reference signs rh1 to rh8 in Fig. 13A represent resistance values of heaters corresponding to the heaters 1011 to 1018 in Fig. 12A, and reference signs rh61 to rh64 in Fig. 13B represent resistance values of heaters corresponding to the heaters 1061 to 1064 in Fig. 12B, respectively. Reference signs rliA1 to rliA8 in Fig. 13A represent resistance values of the individual wiring regions 1221a to 1228a in Fig. 12A. Reference signs rliB1 to rliB8 in Fig. 13A represent resistance values of the individual wiring regions 1221b to 1228b in Fig. 12A. Reference signs rlcA1 to rlcA8 in Fig. 13A represent resistance values of the common wiring region 1211 in Fig. 12A. Reference signs rlcB1 to rlcB8 in Fig. 13A represent resistance values of the common wiring region 1212 in Fig. 12A. Likewise, reference signs rliA61 to rliA64 in Fig. 13B represent resistance values of the individual wiring regions 1241a to 1244a in Fig. 12B, and reference signs rliB61 to rliB64 represent resistance values of individual wiring regions 1241b to 1244b in Fig. 12B. Reference signs rlcA61 to rlcA64 represent resistance values of the common wiring region 1231 in Fig. 12B, and reference signs rlcB61 to rlcB64 represent resistance values of the common wiring region 1232 in Fig. 12B.

The currents flowing through the heaters during the application of the voltage pulse (time t1) illustrated in Fig. 6A between the electrode pads 1201 and 1202 are indicated with reference signs i1 to i8 in Fig. 13A, and the currents are represented by reference signs i61 to i64 in Fig. 13B. In Figs. 13A and 13B, the currents i1 to i8 and i61 to i64 flowing through the heaters are used to represent the currents flowing in regions of the wiring resistances.

In this case, energy E1 inputted to the heater 1011 in Fig. 13A can be expressed by Expression 1 and energy E2 inputted to the heater 1018 therein can be expressed by Expression 2:

$$\text{heater } 1011\text{: } E1 = i1 \times i1 \times rh1 \times t1 \text{ (Expression 1)};$$

and

$$\text{heater } 1018\text{: } E2 = i8 \times i8 \times rh8 \times t1 \text{ (Expression 2)}.$$

Meanwhile, energy E3 inputted to the heater 1061 in Fig. 13B can be expressed by Expression 3 and energy E4 inputted to the heater 1064 therein can be expressed by Expression 4:

$$\text{heater } 1061\text{: } E3 = i61 \times i61 \times rh61 \times t1 \text{ (Expression 3)};$$

and

$$\text{heater } 1064\text{: } E4 = i64 \times i64 \times rh64 \times t1 \text{ (Expression 4)}.$$

Since the heaters in this case are formed simultaneously in the photolithography process, the resistance values rh1, rh8, rh61 and rh64 of the heaters are substantially equal to one another. On the other hand, the currents flowing through the heaters are i1 ≠ i8 ≠ i61 ≠ i64 mainly due to the effects of the portions of the wiring resistances rlc. This causes the variation of energies inputted to the heaters. Consequently, different amounts of the UFBs are generated depending on the heaters, and the stable UFB generation is hampered. In order to stably generate the UFBs in a short time, it is required to reduce the variation of energies inputted to the heaters in the element region.

Examples of suppressing the variation of energies inputted to the multiple heaters 10 in configurations including the heaters 10 will be described below. In addition, examples of detecting energy (threshold energy) to generate film boiling by using the heaters 10 and minimizing the energies to be inputted to the heaters 10 will also be described below.

«First Embodiment»

<Suppression of Variation of Energies>

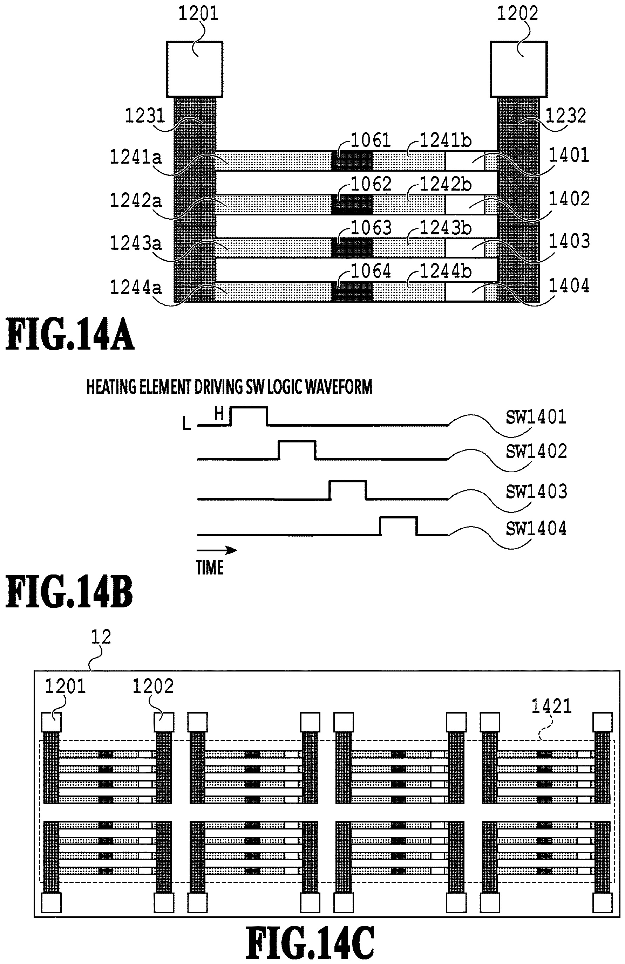

Figs. 14A to 14C are diagrams for describing an example of reducing a difference in wiring resistance loss in the common wiring regions. Fig. 14A is a diagram corresponding to the configuration of Fig. 12B and illustrating an example of a planar layout extracting an element region, which is a part of the element substrate 12. In the configuration illustrated in Fig. 14A, switches (SWs) 1401 to 1404 for controlling the currents flowing through the heaters are arranged on the individual wiring regions 1241b to 1244b, respectively. In the configuration, although power supply voltages (24 V) of the heaters are applied constantly to the electrode pads 1201 and 1202, no currents flow through the heaters while the SWs are turned off (L). Fig. 14B is a diagram illustrating waveforms of logic signals of the SWs 1401 to 1404 driving the heaters. With logic signals H applied to each of the SWs 1401 to 1404, the SWs are turned on while currents generated by the power supply voltage start to flow into the corresponding heaters through the electrode pads 1201 and 1202, and the film boiling is generated on each heater.

The configurations illustrated in Figs. 12A to 13B are configurations of driving all the heaters connected to the electrode pads simultaneously during the application time of the power supply voltages. On the other hand, in the configuration illustrated in Fig. 14A, the heaters 1061 to 1064 are driven while delaying the timing by using the SWs 1401 to 1404. This configuration makes it possible to significantly reduce the wiring resistance losses in common wiring portions 1351 that are affected in the case of simultaneous current flows through the multiple heaters 1061 to 1064 in Fig. 13B. As described above, it is possible to suppress the variation of energies inputted to the heaters by arranging the SWs 1401 to 1404 to allow the drive of the heaters in a time division manner.

Fig. 14C is a diagram illustrating an example in which multiple element regions illustrated in Fig. 14A are arranged on the element substrate 12. It is required to arrange numerous heaters to stably generate the UFBs in a short time. Although Fig. 14C illustrates an embodiment in which eight element regions each provided with the four heaters are arranged for the sake of explanation, it is still possible to arrange even more heaters by increasing the number of the heaters in each element region or increasing the number of the element regions. In the T-UFB generating unit 300, walls 1421 and a lid (not illustrated) are provided to cover the heaters 10 but not to cover the electrode pads 1201 and 1202 on the element substrate 12 to form the liquid chamber. Although no walls for partitioning the inside of the liquid chamber are provided in this embodiment, such walls for partitioning the inside may be provided instead.

Still another method of suppressing the variation of the energies inputted to the heaters is a method of setting a width of a wiring pattern to connect the heaters 10 distant from the electrode pad unit larger than a width of a wiring pattern to connect the heaters 10 close to the electrode pad unit. Instead, a region of a wiring pattern common to the multiple heaters 10 may be increased while reducing a length of an individual wiring pattern to be individually connected to the corresponding heater 10. Alternatively, a region of a common wiring pattern may be expanded by forming multiple wiring layers on the element substrate 12. Various other methods may be used to suppress the variation of energies.

<Film Boiling Threshold Energy>

Next, a description will be given of a relation between "film boiling threshold energy" used by a heater to bring a liquid into film boiling and the "energy inputted to the heater". The "film boiling threshold energy" is minimum energy required for bubbling (film boiling) the liquid W by heating with the heater 10. To be more precise, as illustrated in Fig. 6A, this is the energy calculated from the voltage and the current pulse width at the point of start of the film boiling (the bubbling) as a consequence of gradually extending the pulse width of the inputted current at the constant voltage. On the other hand, the "energy inputted to the heater" means the energy inputted directly to the heater 10. The film boiling develops under such a condition that the "energy inputted to the heater" is larger than the "film boiling threshold energy". For this reason, a ratio of the "energy inputted to the heater" relative to the "film boiling threshold energy" turns out to be a value equal to or above 1 in the case of causing the heater 10 to generate the film boiling.

In this example, the "energy inputted to the heater" is set such that all the heaters in a group of heaters to cause the film boiling at once upon application of the voltage pulse basically bring about the film boiling under any environment. In a case where the voltage is constant, for example, the "energy inputted to the heater" is set to have such a pulse width longer than a pulse width of the "film boiling threshold energy".

The temperature of each heater 10 starts to rise due to this "energy inputted to the heater". Until the film boiling comes into being, the heat is transmitted to the liquid through the protective layer 309 and the cavitation-resistant film 310 at an upper part of the heater 10 (see Fig. 5A). The liquid disappears from above the heater 10 as soon as the film boiling develops. For this reason, in the case where the film boiling is generated, the heat from the heater 10 is not transmitted to the liquid and a temperature rise curve with respect to the inputted energy becomes steep. In other words, more excessive is the rise in temperature that does not contribute to the film boiling, the temperature of the heater 10 becomes higher. This may consequently reduce the product life of the heater 10. For this reason, it is preferable to set the "energy inputted to the heater" as small as possible.

Here, the control unit 600 sets the "energy inputted to the heater" in consideration of the "film boiling threshold energy" as well as various wiring resistances and the like of the substrate. Nevertheless, the "film boiling threshold energy" is an estimated value that is obtained theoretically. It is possible to estimate the energy for generating the film boiling by means of calculation using heat transfer of a film, a resistance of a heat generator, an applied voltage, and the like. On the other hand, the area of the element substrate 12 loading the heaters 10 tends to become larger in order to generate a large amount of the UFBs at low cost. In this case, a variation of the "film boiling threshold energies" among the heaters occurs due to various factors including pressures of films forming the heaters 10, film pressures of insulation films or protection films for electrically and physically protecting the heaters against the liquid, the atmospheric pressure, and so forth. In a case of using the multiple element substrates 12, for example, each of the element substrates 12 may cause the variation of the "film boiling threshold energies". Meanwhile, the variation of the "film boiling threshold energies" may occur inside each element substrate 12 depending on individual locations of the heaters 10 therein or other factors. As described above, the values of the "film boiling threshold energy" may vary due to the variation in the manufacturing process of the element substrates 12 or due to various environmental conditions.

This is why the "energy inputted to the heater" is frequently set by providing the "film boiling threshold energy" with a certain margin. As a consequence, the product life of each heater 10 may be reduced in case of an input of excessive energy.

As described above, the energy to be actually inputted to each heater 10 is determined based on the "film boiling threshold energy". Accordingly, if it is possible to obtain the value of the "film boiling threshold energy" in the case where the film boiling is actually generated, then more appropriate input energy can be determined. In other words, it is possible to extend the product life of each heater 10 while stably generating the UFBs by inputting the minimum required energy to each heater 10, which is equal to or above the value of the "film boiling threshold energy" in the case where the film boiling is actually generated.

<Derivation of Threshold Energy>

A description will be given below of an example of deriving the "film boiling threshold energy" in the case where the film boiling is actually generated by the heater 10. In this embodiment, a detection unit configured to detect a physical change (a change in temperature, pressure, or the like) at the start of film boiling is provided in the vicinity of the heater 10 that generates the UFBs. For example, the detection unit detects the physical change at the start of film boiling by using a sensor. Then, the control unit 600 derives the "film boiling threshold energy" of the heater 10 based on information obtained by the detection with the detection unit. The "film boiling threshold energy" can be derived if it is possible to obtain an actual time period from the application of the voltage pulse to the actual start of the film boiling, for example. The control unit 600 sets the "energy inputted to the heater" in the group of heaters including the relevant heater 10 by using the "film boiling threshold energy" thus obtained.

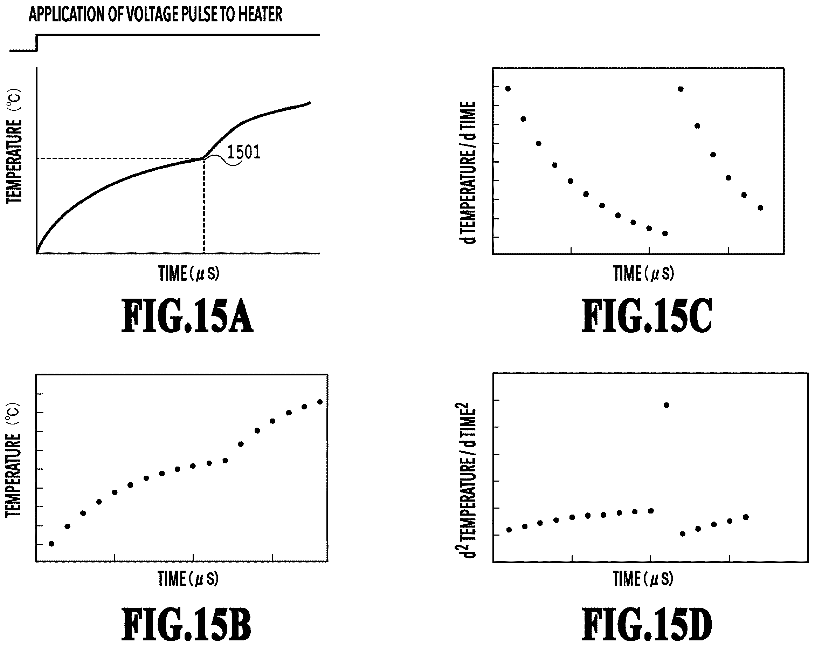

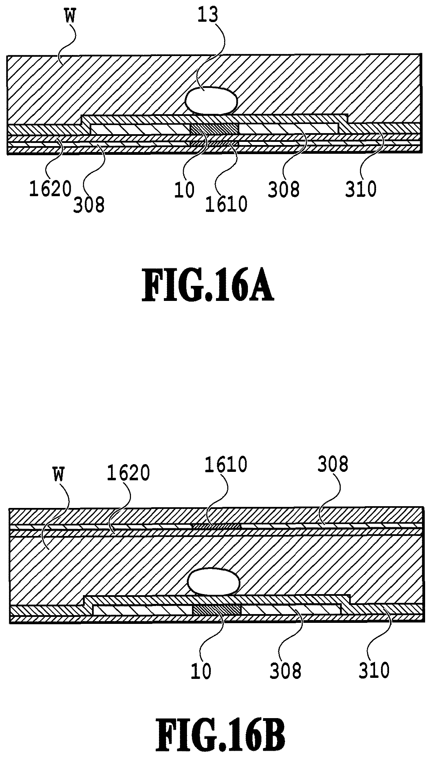

Figs. 15A to 15D are graphs depicting a relation between time of application of the voltage pulse to the heater 10 and a change in temperature in the vicinity of the heater. Fig. 15A illustrates a temperature profile obtained from a temperature detecting element (see a temperature detection element 1610 in Fig. 16A) in a case where the temperature detection element 1610 is provided in the vicinity of the heater 10 and the voltage pulse is applied to the heater 10. As illustrated in Fig. 15A, a singularity 1501 comes into being in a case where the voltage is continuously applied to the heater 10. As discussed earlier, this is the singularity that arises as a consequence of generation of the film boiling with which the transfer path to dissipate the heat from the heater (the heat generator) is blocked from the liquid. This embodiment focuses on the singularity 1501. Fig. 15B illustrates an example in which the temperature profile in Fig. 15A is obtained by conducting a discrete measurement. Fig. 15B illustrates an example in which time intervals of measurement points are spread for the sake of explanation. However, the present invention is not limited only to this example. For instance, it is desirable to conduct the measurement at a measurement interval which is at least equal to 1/10 or preferably equal to or below 1/100 as large as the pulse width that represents application of the film boiling threshold energy. In the meantime, Fig. 15B illustrates an example of conducting the measurement at constant intervals starting from the application of the voltage pulse in order to facilitate the understanding. However, the present invention is not limited only to this example. If the pulse width corresponding to the film boiling threshold energy is predictable in advance, then measurement accuracy may be improved by reducing measurement intervals around the threshold.

Fig. 15C illustrates an example that represents a change in temperature (a differential by time) in a predetermined time period relative to the measurement points in Fig. 15B. It is apparent from Fig. 15C that an abrupt change in temperature in the predetermined time period occurs at the singularity of the pulse corresponding to the film boiling threshold energy. Fig. 15D is a graph representing a change of the measurement information in the predetermined time period of Fig. 15C (which is consequently a graph obtained by subjecting the temperature values to second order differential) in order to identify the applied pulse width corresponding to the film boiling threshold energy. It is clear from Fig. 15D that application time corresponding to the pulse width having the largest change is detected as a point of the singularity. The film boiling threshold energy is derived from the application time corresponding to the pulse width and the voltage of the voltage pulse. It is possible to detect the singularity of the heater 10 and to derive the "film boiling threshold energy" by detecting the temperature while using the temperature detection element 1610 arranged in the vicinity of the heater 10. Note that the singularity may be detected by using the temperature detection element 1610, by a controller (not illustrated) to control the temperature detection element 1610, or by the control unit 600. In other words, the detection unit that detects generation of the film boiling includes the sensor such as the temperature detection element 1610. Alternatively, the detection unit may include a processing unit such as the controller (not illustrated) to control the sensor and the control unit 600 that performs processing based on information from the sensor.

Figs. 16A and 16B are diagrams illustrating a cross-section in the vicinity of a heater 10. Fig. 16A illustrates an example in which the temperature detection element 1610 is arranged below the heater 10 through an insulation film 1620 (in a direction on an opposite side of the side where the liquid W is present relative to the heater 10). The temperature detection element 1610 is disposed immediately below the heater 10 by using a semiconductor film deposition process. By arranging the temperature detection element 1610 in the vicinity of the heater 10 as described above, the control unit 600 can detect the singularity attributable to the "film boiling" at each heater 10. Moreover, the control unit 600 can derive the "film boiling threshold energy" based on the detected singularity. The "film boiling threshold energies" derived as described above may possibly vary among the heaters 10. The control unit 600 of this embodiment sets the "energy inputted to the heater" based on each "film boiling threshold energy" thus derived. In this way, the control unit 600 can determine the input energy so as to efficiently control the drive of each heater 10 while generate the stable UFB generation.

Although Fig. 16A describes the example of arranging the temperature detection element 1610 immediately below each heater 10, the present invention is not limited only to this configuration. The temperature detection elements 1610 may be arranged immediately below some of the heaters on the element substrate 12. In the case where the element substrate 12 has a large area as mentioned above, the "film boiling threshold energies" of the heaters 10 may vary depending on positions where the heaters 10 are mounted. In this regard, the temperature detection element 1610 may be arranged in the vicinity of the heater 10 located at a representative position. On the other hand, the temperature detection elements 1610 may be partially arranged also in a case where differences in the "film boiling threshold energies" among the heaters 10 are equal to or below a predetermined value due to small variation in the manufacturing process of the heaters 10. In addition, various other modifications may be applied as described below.

<First Modified Example>

Fig. 16B is a diagram illustrating another example of the cross-section in the vicinity of the heater 10. In this example, the temperature detection element 1610 is not arranged immediately below the heater 10. In this example, the temperature detection element 1610 is arranged on an opposed surface with the liquid W in between instead of the element substrate 12 that includes the multiple heaters 10 for generating the UFBs. In this case, the "film boiling threshold energy" may be derived while taking into account transmission time of the temperature in the liquid W. The transmission time may be obtained by a prescribed calculation or a value obtained by an actual measurement may be used as the transmission time.

<Second Modified Example>

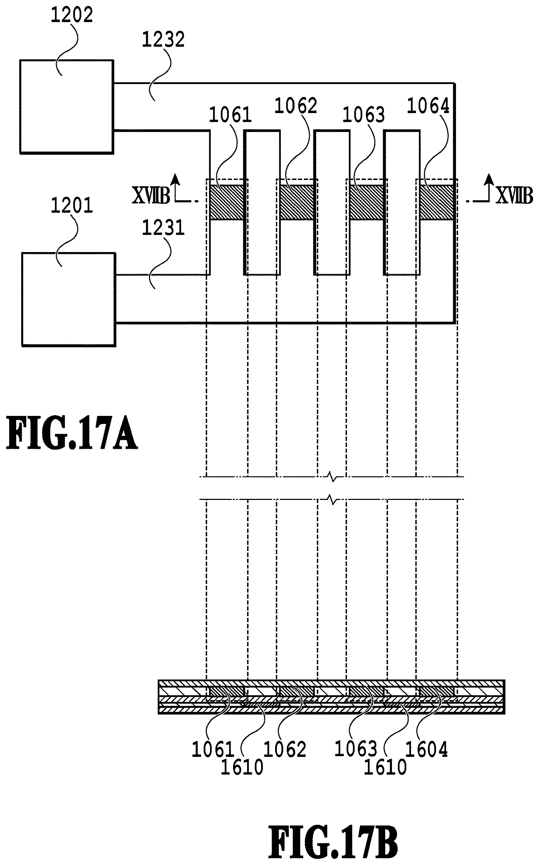

Fig. 17A and 17B are diagrams illustrating an example of the element substrate 12 corresponding to Fig. 12B. Fig. 17A is a plan view of the element substrate 12. Fig. 17B is a cross-sectional view taken along the XVIIB line in Fig. 17A. This example represents a case of arranging the temperature detection elements 1610 between every two heaters instead of arranging the temperature detection elements immediately below the heaters 1061 to 1064 for generating the UFBs. The arrangement of each temperature detection element 1610 between the heaters makes it possible to reduce the number of the temperature detection elements relative to the heaters. In this example, the transfer time of the change in temperature of each heater is slightly delayed as compared to the case of arranging the temperature detection element immediately below each heater. Accordingly, the "film boiling threshold energy" is detected while taking into account this delay time. Specifically, the control unit 600 may determine the "film boiling threshold energy" while calculating the pulse width corresponding to the "film boiling threshold energy" by taking the delay time into account. The delay time may be obtained by a prescribed calculation or a value obtained by an actual measurement may be used as the delay time.

<Third Modified Example>

The first embodiment and the first and second modified examples thereof have described the example of deriving the "film boiling threshold energy" by detecting the heat at the time of the film boiling by using the temperature detection element 1610. In the meantime, this modified example will describe an example of obtaining the pulse width corresponding to the "film boiling threshold energy" by detecting the pressure using a sensor such as a piezoelectric element which reacts to the pressure.

As illustrated in Fig. 6A, in the case of generating the film boiling by using the heater 10, an extremely large pressure wave occurs at the time of generation of the film boiling as observed at timing 1 in Fig. 6A. Specifically, time from the start of application of the voltage (the energy) to first detection of a specific pressure with the pressure sensor constitutes original information (information on the pulse width) of the "film boiling threshold energy" as illustrated in Fig. 6A. As described above, the "film boiling threshold energy" can also be detected by using the pressure sensor. In other words, as with the case of the temperature sensor, it is possible to detect the generation of the film boiling and to derive the "film boiling threshold energy" by obtaining the singularity in the profile that depicts the pressures depending on the time units.

Here, the transmission of the pressure is fast in the case where the pressure sensor is provided on the same substrate as the heater 10 and arranged immediately below the heater 10 as in the case described with reference to Fig. 16A in the first embodiment. Meanwhile, the transmission of the pressure is fast also in the case of arranging the pressure sensor in the middle of the heaters as in the case of the second modified example. On the other hand, in the case where the pressure sensor and the heater 10 are not provided on the same substrate as in the case of the first modified example, the "film boiling threshold energy" may be derived by taking into account pressure transmission time in the liquid.

<Fourth Modified Example>

The third modified example has described the case of detecting the "film boiling threshold energy" by detecting the pressure corresponding to the generation of the film boiling while using the pressure sensor located in the vicinity of the heater 10. Here, the position to locate the pressure sensor does not always have to be in the vicinity of the heater 10 because the pressure at the time of generation of the film boiling is extremely large. This modified example represents a case in which the pressure sensor is not located in the vicinity of the heater 10. For example, a configuration to detect the pressure only needs to be provided such that the heater 10 for generating the UFBs is in contact with the liquid to be heated. On the other hand, in a case where the liquid is in contact with air, the pressure is transmitted through the air in the form of a sound wave. Accordingly, the "film boiling threshold energy" may be detected by sensing the sound in the air.

The first embodiment and the modified examples thereof have been described above. The control unit 600 sets the "energy inputted to the heater" based on the "film boiling threshold energy" detected as described above. For example, the "energy inputted to the heater" may be determined by applying a prescribed coefficient to the "film boiling threshold energy". In the case where multiple heaters 10 are provided on the element substrate 12, the "energy inputted to the heater" may possibly vary depending on the locations of the heaters 10 and other factors. The "energy inputted to the heater" can be set to the energy which is about one to three times as large as the "film boiling threshold energy". Here, the "energy inputted to the heater" may be set to the energy which is about 1.01 to 1.3 times as large as the "film boiling threshold energy" in order to achieve the long product life.

While this embodiment has described the case of arranging various sensors at various locations, the sensors and the locations thereof may be combined as appropriate. For example, the temperature detection element (the temperature sensor) and the pressure sensor may be used in combination. Meanwhile, in another configuration, the sensors may be arranged immediately below the heaters 10 in a certain region of the element substrate 12 while the sensors may be arranged between the heaters 10 in the remaining region thereof. Alternatively, in a certain region of the element substrate 12, the sensors may be arranged at positions opposed to the heaters in the direction of presence of the liquid while interposing the liquid in between.

Meanwhile, the description has been given of the case of controlling the "energy inputted to the heater" based on the information on the "film boiling threshold energy". Although this feedback control is preferably conducted on a regular basis, the control may be conducted on an irregular basis instead.

«Second Embodiment»

The first embodiment has described the example of suppressing the variation of the inputted energies in the case of using the element substrate 12 provided with the multiple heaters 10. The first embodiment has also described the case of extending the product life by deriving the "film boiling threshold energy" and performing the control in such a way as to minimize the "energy inputted to the heater". As described in the first embodiment, in the case of generating the UFBs by causing the film boiling while using the heaters for generating the UFBs, the element substrate 12 provided with the multiple heaters 10 is required for achieving productivity at a high density around 1 billion bubbles per milliliter of the UFBs at a rate of 1 L/min. For instance, several hundreds of thousands of the heaters 10 are provided to the element substrate 12 and these multiple heaters 10 need to be driven efficiently. The second embodiment will described a configuration to drive the heaters 10 simultaneously.

<Configuration of T-UFB Generating Unit>

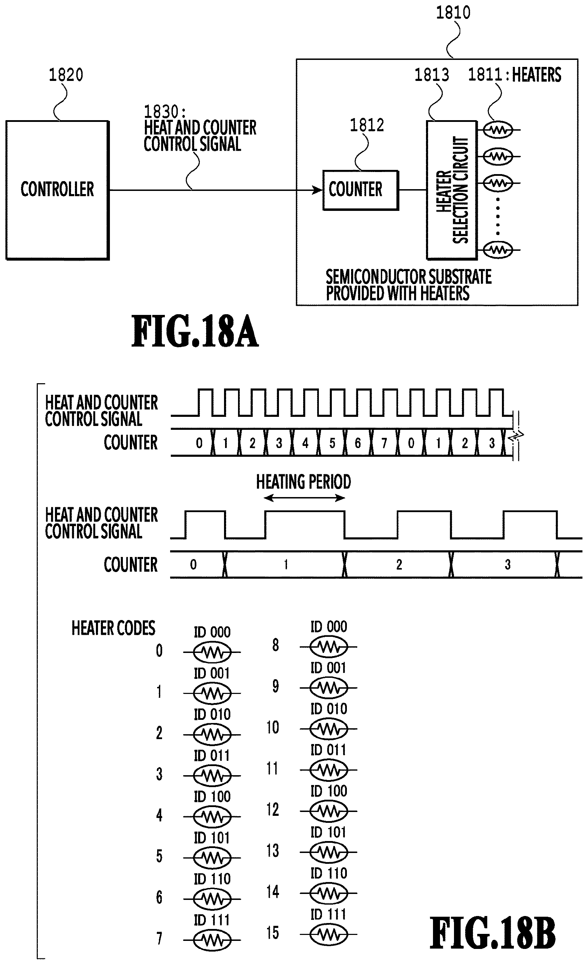

Figs. 18A and 18B are diagrams illustrating a configuration of the T-UFB generating unit 300 and a timing chart applicable thereto. Fig. 18A is a diagram illustrating the configuration of the T-UFB generating unit 300. The T-UFB generating unit 300 includes a controller 1820 and a semiconductor substrate 1810 provided with heaters 1811. The controller 1820 may be the same as the control unit 600 illustrated in Fig. 1 or different therefrom. Each heater 1811 is the same as the heater 10 described in the first embodiment. The semiconductor substrate 1810 is the same as the element substrate 12 described in the first embodiment. Note that the controller and the semiconductor substrate are also provided in more embodiments to follow and correlations thereof with the configuration of the first embodiment are the same as those in the above-mentioned examples. The semiconductor substrate 1810 includes the multiple heaters 1811, a counter 1812, and a heater selection circuit 1813.

The controller 1820 outputs a heat and counter control signal 1830 to the counter 1812 included in the semiconductor substrate 1810. The respective heaters 1811 included in the semiconductor substrate 1810 are provided with individual ID codes. The heat and counter control signal 1830 is a signal that serves both as a heat signal and a counter control signal. In the example illustrated in Figs. 18A and 18B, a single-type signal is outputted from the controller 1820 to the semiconductor substrate 1810, and the heat and counter control signal 1830 being the single-type signal selects the heater 1811 to be driven from the multiple heaters 1811 and drives the selected heater 1811 as appropriate. A fixed value is assumed to be set to each heater 1811 as its ID code at the time of manufacturing the semiconductor substrate 1810.

An operation example of the semiconductor substrate 1810 inclusive of an operation of the counter 1812 will be described with reference to Fig. 18B. A timing chart at an upper part of Fig. 18B represents an example in which the heat and counter control signal 1830 outputs a fixed pulse. A timing chart at a middle part of Fig. 18B represents an example in which the heat and counter control signal 1830 outputs a variable pulse in accordance with CLK in the controller 1820. A lower part of Fig. 18B illustrates an example of the ID codes to be provided to the heaters 1811. Although an example to assign three bits to each heater as its ID code is described therein, the number of bits is not limited only to this example. In the meantime, the ID codes of the heaters 1811 may be repeatedly used in the semiconductor substrate 1810. In other words, the number of the heaters 1811 may be more than 8 pieces that correspond to the maximum three-bit number. In Fig. 18B, the ID code "000" is provided to the heater with the heater code " 1" and to the heater with the heater code 8 at the same time.

The counter 1812 counts up based on the heat and counter control signal 1830 outputted from the controller 1820. In this example, the timing to count up is set to timing of each trailing edge of the heat and counter control signal 1830. In another configuration, the timing to count up may be set to timing of each rising edge of the heat and counter control signal 1830 by the counter 1812. In this example, the number of bits of the counter is set to three bits. The counter 1812 counts up at each trailing edge of the heat and counter control signal 1830 to a maximum value of the number of bits of the counter, and then returns to a counter value of 0 at the subsequent trailing edge of the heat and counter control signal 1830.

The heater selection circuit 1813 compares the counter value of the counter 1812 with the ID codes of the heaters, and drives the corresponding heater 1811. As illustrated in Fig. 18B, the controller 1820 can control a transfer frequency as well as high and low duties of the heat and counter control signal 1830. Each high period of the heat and counter control signal 1830 corresponds to driving time of the heater 1811. Here, a low period may be set to the driving time of the heater instead. Although this embodiment has described the example of the configuration in which there are the heaters corresponding to all the counter values, a configuration in which there are no heaters corresponding to a certain counter value may also be acceptable.

As described above, according to this embodiment, it is possible to dynamically control the driving time to simultaneously drive the multiple heaters by using a simple configuration. This makes it possible to uniformly control the temperature or the electric power in the case where the semiconductor substrate 1810 is in use. As a consequence, the UFBs can be generated efficiently. For example, it is also possible to input the appropriate energy to the heaters by controlling the duties of the heat and counter control signal 1830 in accordance with the detected "film boiling threshold energy" as described in the first embodiment.

«Third Embodiment»

The second embodiment has described the example of simultaneously driving the multiple heaters. The second embodiment has also described the example to enable dynamic control of the driving time of the heaters to be driven simultaneously. This embodiment will describe an example that can dynamically change the number of the heaters to be driven simultaneously, the driving order thereof, and the driving time thereof.

<Configuration of T-UFB Generating Unit>

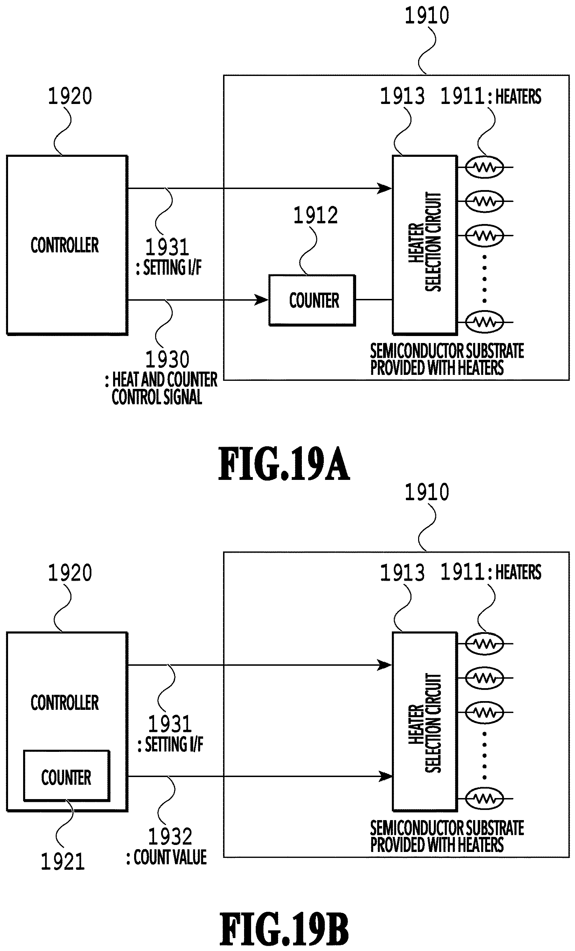

Figs. 19A to 19D are diagrams illustrating configurations of the T-UFB generating unit 300. Specifically, the T-UFB generating unit 300 includes a controller 1920 and a semiconductor substrate 1910 provided with heaters 1911. Figs. 19A to 19D illustrate four examples. In the following, the respective examples will be described one by one.

Fig. 19A depicts the same configuration as the example described in the second embodiment. Specifically, the semiconductor substrate 1910 includes a counter 1912 and a heater selection circuit 1913. Moreover, a heat and counter control signal 1930 is outputted from the controller 1920 to the counter 1912 of the semiconductor substrate 1910. This configuration is different from the configuration of the second embodiment in that a control line of a setting I/F 1931 is connected between the heater selection circuit 1913 of the semiconductor substrate 1910 and the controller 1920.

The setting I/F 1931 is an interface for setting the number of the heaters 1911 to be driven simultaneously and the driving order thereof. The controller 1920 can set the number of the heaters to be driven simultaneously and the driving order thereof to the heater selection circuit 1913 through the setting I/F 1931. To be more precise, the heaters 1911 of this embodiment are provided with ID codes as with the second embodiment. The controller can designate the bits used for identifying the ID code through the setting I/F 1931. This makes the controller 1920 possible to set the number of the heaters to be driven simultaneously and the driving order thereof to the heater selection circuit 1913. In this example, the controller 1920 sets up a given setting value (a setting type) through the setting I/F 1931. The heater selection circuit 1913 drives the corresponding heater based on the setting value thus set up as well as on the ID code of the heater and the counter value. Here, a fixed value is assumed to be set to each heater 1911 at the time of manufacturing the semiconductor substrate 1910 in this embodiment as well. However, an arbitrary ID code may be settable to each heater 1911 through the setting I/F 1931 and the like at a point after manufacturing the semiconductor substrate 1910.

As described in the second embodiment, the counter 1912 counts up the counter value by using the heat and counter control signal 1930. The heater selection circuit 1913 drives the heater 1911 which has the ID code coinciding with the relevant setting value and the counter value coinciding with the relevant setting value. As a consequence, according to this example, it is possible to dynamically set the number of the heaters 1911 to be driven simultaneously and the driving order thereof. More details will be described later.

Fig. 19B describes an example in which the semiconductor substrate 1910 is not provided with the counter but the controller 1920 includes a counter 1921 instead. In this example, count values are outputted from the counter 1921 of the controller 1920 to the heater selection circuit 1913. Note that this example can dynamically change the number of the heaters to be driven simultaneously, the driving order thereof, and the driving time thereof by applying the power supply voltage and causing the heater selection circuit 1913 to switch the heaters 1911 in accordance with the count values.

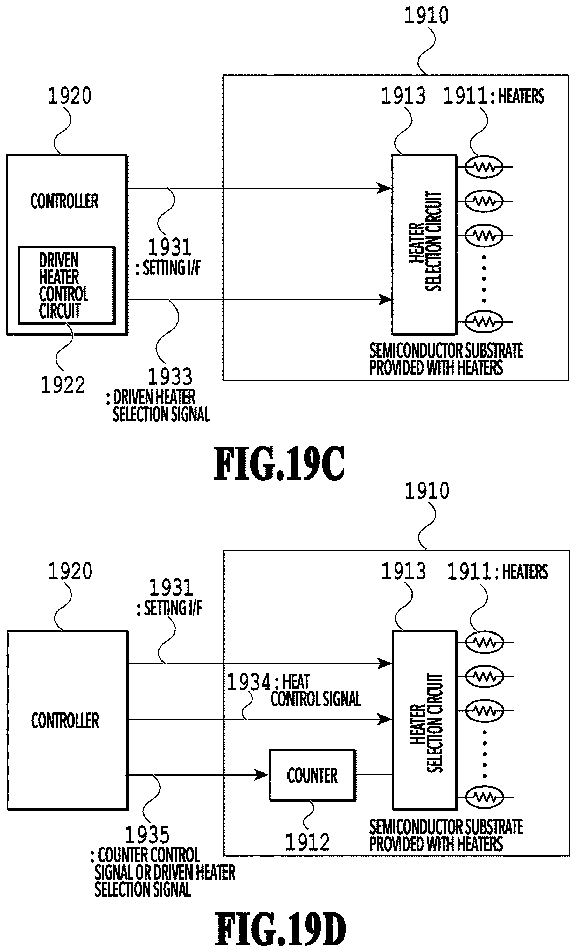

Fig. 19C describes an example of not using a counter. Specifically, the controller 1920 includes a driven heater control circuit 1922 and a driven heater selection signal 1933 is outputted from the driven heater control circuit 1922 to the heater selection circuit 1913. The driven heater selection signal 1933 is a signal indicating a value corresponding to the ID code of a heater. The heater selection circuit 1913 selects the heater 1911 to be driven based on the driven heater selection signal 1933.

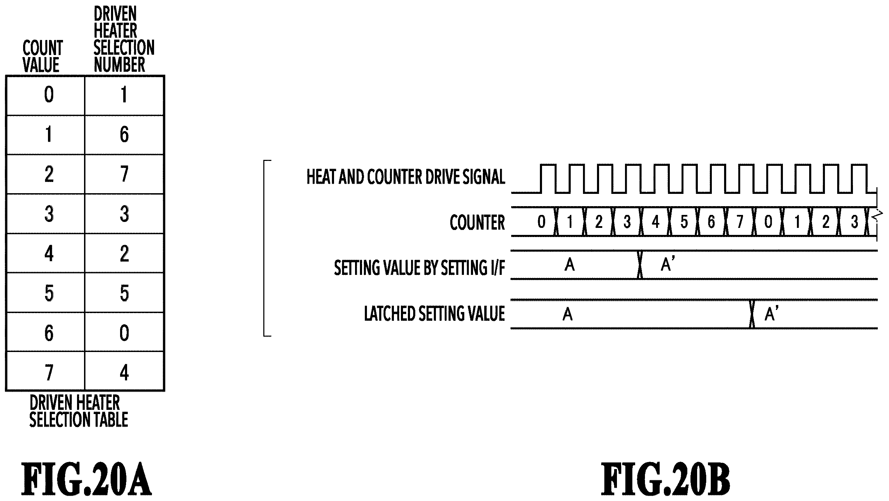

Figs. 20A and 20B are diagrams describing the heaters to be selected. Fig. 20A illustrates an example of a driven heater selection table provided to the driven heater control circuit 1922 in the configuration of Fig. 19C. The driven heater selection table is a table that defines the order of the heaters to be driven. The driven heater control circuit 1922 is configured to refer to the driven heater selection table, to determine a selection number of the heater to be driven in accordance with the not-illustrated count value inside the controller 1920, and to output the selection number to the heater selection circuit 1913. The driven heater selection signal 1933 directly designates the ID codes of the heaters to be driven, and can thus control the driving order as appropriate. Here, the controller 1920 can change values included in the driven heater selection table illustrated in Fig. 20A into other arbitrary values. Fig. 20B will be discussed later.

Fig. 19D describes an example in which a heat control signal 1934 is outputted from the controller 1920 to the heater selection circuit 1913 by using a different route. In Fig. 19D, and counter 1912 is provided as with the case in Fig. 19A. Here, the controller 1920 may include the counter as described with reference to Fig. 19B. Alternatively, the driven heater selection signal may be used instead of using the counter as described with reference to Fig. 19C. Provision of the heat control signal 1934 on the different route makes it possible to set the number of the heaters to be driven simultaneously, the driving order thereof, and the driving time thereof more flexibly.

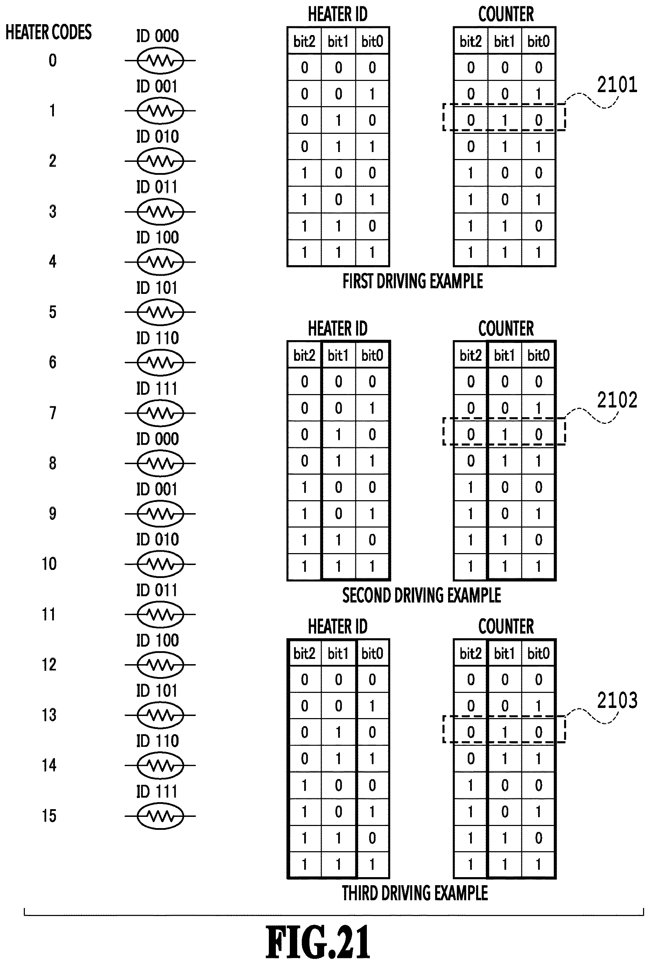

Fig. 21 is a diagram describing the heater selection circuit 1913. Here, the heater selection circuit 1913 selects the heater 1911 to be driven based on the setting value set by the setting I/F 1931 and on the count value of the counter 1912 (or the counter 1921). In this example, the setting I/F 1931 from the controller 1920 can dynamically change the number of the heaters to be driven simultaneously and the driving order thereof. Here, a description will be given of an example of a configuration in which the number of the heaters is 16, the ID of each heater is a 3-bit number (0 to 7), and the number of bits of the counter is 3 bits. However, the numbers of bits of the ID and of the counter are not limited. Meanwhile, the heater codes in Fig. 21 are defined as codes that uniquely specify the respective heaters unlike the heater IDs. In the example of Fig 21, the heater ID "000" is assigned to the heaters having the heater codes "0" and "8", for instance. In this way, the IDs are assigned to the heaters in the order of 0, 1, 2, ..., 7, 0, 1, ..., and 7.

Fig. 21 illustrates three driving examples. Simultaneous drive control is conducted in accordance with any of these driving examples in accordance with the setting value set by the setting I/F 1931. The respective driving examples are different depending on which bits out of the numbers of bits (3 bits) of the heater ID and of the counter are used.

A first driving example will be described to begin with. The first driving example is a driving example that uses 3 bits of the number of bits of each heater ID and 3 bits of the number of each counter. The controller 1920 can set the numbers of used bits by employing the setting I/F 1931. For example, the controller 1920 sets a least significant bit (LSB) of the IDs of the used heaters to "0" and sets a most significant bit (MSB) of the IDs of the used heaters to "2". Moreover, the controller 1920 sets the LSB of the bits of the used counters to "0" and sets the MSB of the bits of the used counters to "2". Thereafter, the controller 1920 outputs the heat and counter control signal 1930, thus causing the counter 1912 to count up as described above. In this instance, the heaters having the value of the counter and the value of the ID coinciding with the bits selected by the setting I/F are driven during a high period of the heat and counter control signal (or the heat control signal). In the case where the counter value is selected at timing 2101, for example, the heaters having the heater ID "010" are driven. Specifically, the heaters having the heater codes "2" and "10" are driven. The number of simultaneous drive is 2 in this case.

Next, a second driving example will be described. The second driving example is a driving example that uses 2 bits of the number of bits of each heater ID and 2 bits of the number of each counter. The controller 1920 sets the numbers of used bits by employing the setting I/F 1931. Specifically, the controller 1920 sets the LSB of the IDs of the used heaters to "0" and sets the MSB of the IDs of the used heaters to "1". Moreover, the controller 1920 sets the LSB of the bits of the used counters to "0" and sets the MSB of the bits of the used counters to "1". Thereafter, the controller 1920 outputs the heat and counter control signal 1930, thus causing the counter 1912 to count up. In this instance, the heaters having the value of the counter and the value of the ID coinciding with the bits selected by the setting I/F are driven during a high period of the heat and counter control signal (or the heat control signal). In the case where the counter value is selected at timing 2102, the heaters having a combined value of bit1 and bit0 equal to "10" in the heater IDs are driven. Here, the value of bit2 may be any value. Specifically, the heaters having the heater codes "2", "6", "10", and "14" are driven. The number of simultaneous drive is 4 in this case.

Next, a third driving example will be described. A description will be given of the third driving example that uses 2 bits of the number of bits of each heater ID and 2 bits of the number of each counter as with the second driving example. However, different LSB and MSB values are used herein. Specifically, the controller 1920 sets the LSB of the IDs of the used heaters to "1" and sets the MSB of the IDs of the used heaters to "2". Meanwhile, the controller 1920 sets the LSB of the bits of the used counters to "0" and sets the MSB of the bits of the used counters to "1". Here, in the case where the counter value is selected at timing 2103, the heaters having a combined value of bit2 and bit1 equal to "10" in the heater IDs are driven. Specifically, the heaters having the heater codes "4" and "12" are driven. The number of simultaneous drive is 2 in this case.

As described above, the number of the simultaneous drive and the driving order can be changed based on the bits of the IDs and the counters designated by the controller 1920 through the setting I/F 1931. Here, the setting values of the setting I/F 1931 may be reflected at once or reflected at prescribed timing. Fig. 20B illustrates an example of a configuration in which the heater selection circuit is latched at timing of one cycle of the counter instead of reflection to the heater selection circuit at time of transfer of the setting values from the controller 1920 through the setting I/F 1931.

As described above, according to this embodiment, it is possible to dynamically set the number of the heaters to be driven simultaneously, the driving order thereof, and the driving time thereof. This embodiment can also control a frequency for driving the heaters by using the frequency of the heat and counter control signal 1930 from the controller 1920. Meanwhile, it is also possible to control the time for driving the heaters by using the high periods in the heat and counter control signal 1930 from the controller 1920.

<<Fourth Embodiment>>

This embodiment will describe examples of controlling the drive of the heaters 10 by using specific circuit examples. As described in the first embodiment, the configuration including the detection unit which detects the "film boiling threshold energy" can also detect the heaters 10 that are not driven. For example, this configuration can detect a heater which is not driven due to disconnection and the like. This embodiment will also describe an example of setting the heaters to be driven while ignoring the heater applicable to the aforementioned case. In other words, this embodiment will also describe an example that can dynamically control the number of the heaters to be driven simultaneously even in the case of the occurrence of disconnection and the like.

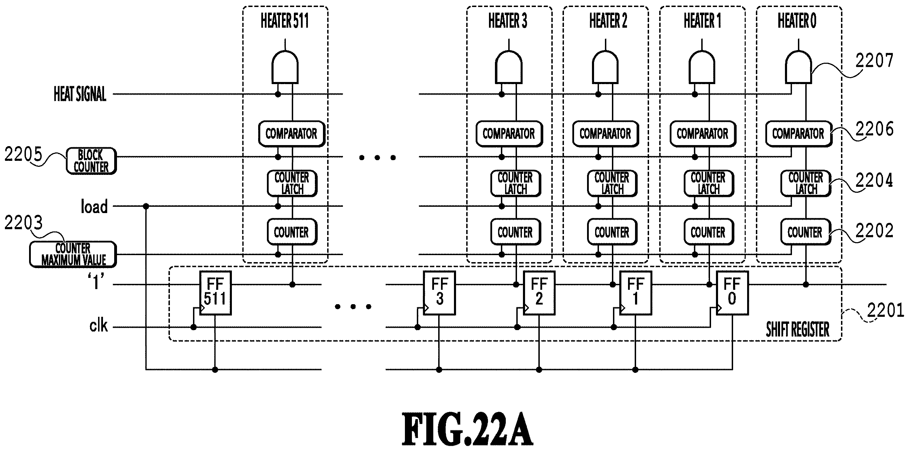

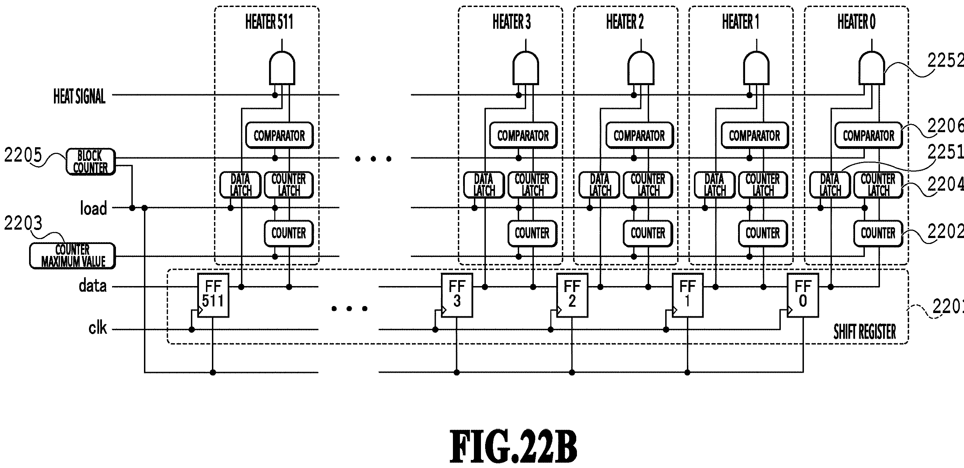

Fig. 22A and 22B are diagrams illustrating examples of control circuits for the switches (SWs) that control the currents flowing through the respective heaters. Fig. 22A illustrates a first example and Fig. 22B illustrates a second example. Now, the first example illustrated in Fig. 22A will be described to begin with. The first example is a case of describing an example of a circuit configuration that performs the simultaneous drive by means of time division control. The second example is a case of describing an example of a circuit configuration that performs the simultaneous drive while excluding the heaters that cause disconnection and the like.

<First Example>

In Fig. 22A, a shift register 2201 is formed from 512 flip-flop circuits (FF0 to FF511). A high level H of a logic signal is applied to a D terminal of the FF511. In the following description, the high level H of the logic signal will be indicated with "1" and a low level L thereof will be indicated with "0". A load signal is connected to a reset terminal of each flip-flop circuit. Accordingly, the low level L of the logic signal is outputted from a Q terminal in a case where the load signal becomes a high level H.

In the following, constituents of a control circuit of the SW corresponding to the heater 0 will be described as an example. A counter 2202 is connected to a clk signal (not illustrated). If the Q terminal of the FF0 is set to "1" at a rising edge of the clk signal, a counter value is incremented by 1. Moreover, the counter 2202 is connected to a counter maximum value 2203 to be described later. If the Q terminal of the FF0 is set to "1" at the rising edge of the clk signal and if a value inputted from the counter maximum value 2203 is equal to the counter value, then the counter value returns to 0. Furthermore, the counter 2202 is also connected to the load signal (not illustrated). The counter value returns to 0 at a rising edge of the load signal.

The counter maximum value 2203 includes a register that holds a value serving as the counter maximum value in the inside. A value obtained by subtracting 1 from the number of time divisions in the case of driving the heaters by conducting the time division is set to the counter maximum value 2203.

The counter value of the counter 2202 is connected as an input signal to a counter latch 2204. The counter latch 2204 latches the counter value of the counter 2202 to inside in the case where the load signal becomes "1".

A block counter 2205 is incremented by 1 at a rising edge of a heat signal. A counter value of the block counter 2205 returns to 0 if the counter value is equal to the value set to the counter maximum value at the rising edge of the heat signal. In the meantime, the counter value of the block counter 2205 returns to 0 also in the case where the load signal becomes "1".

A comparator 2206 outputs the value "1" in a case where the value latched by the counter latch 2204 is equal to the counter value of the block counter 2205. An AND gate 2207 includes two input terminals, and the output from the comparator 2206 and the heat signal are connected to the input terminals. An output terminal of the AND gate 2207 is connected to the SW.

The control circuit for each of the SWs corresponding to the heaters 1 to 511 includes the shift register 2201, the counter 2202, the counter latch 2204, the comparator 2206, and the AND gate 2207 likewise. Moreover, the control circuit is connected to the counter maximum value 2203 and to the block counter 2205. Although Fig. 22A illustrates the example of the configuration of the control circuits for 512 heaters, the number of the heaters may be different. The control circuits can deal with the different number of the heaters simply by increasing or decreasing the constituents corresponding to the respective heaters described above.

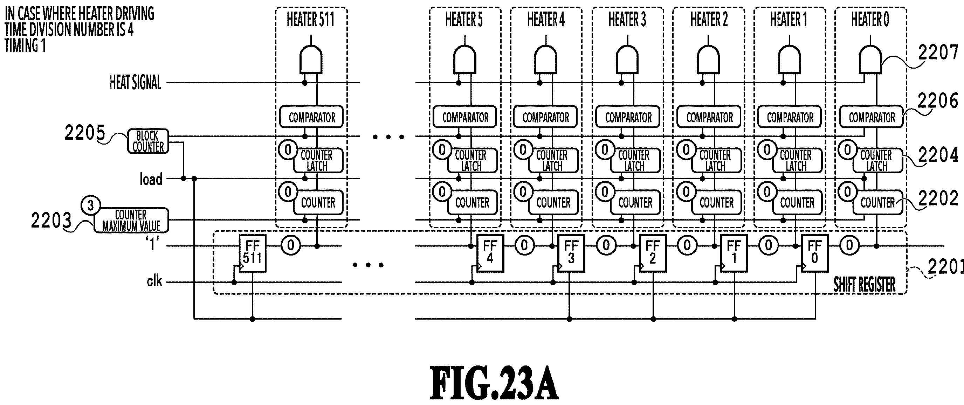

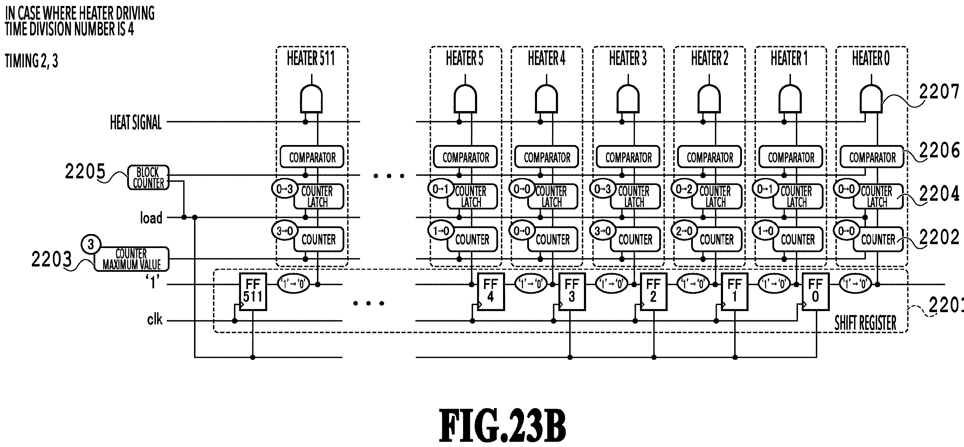

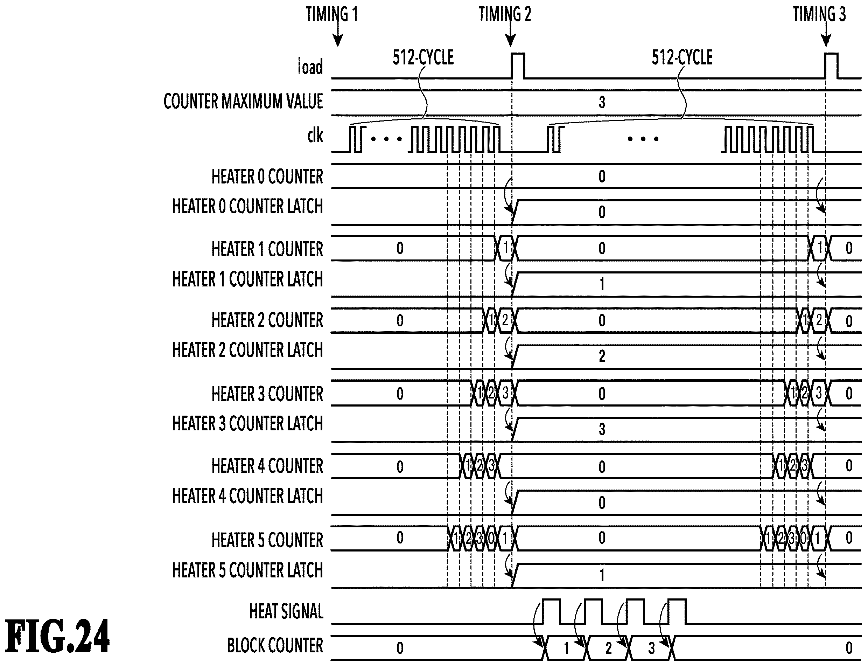

Next, an example of the configuration of the control circuits of Fig. 22A applicable to a case where a heater driving time division number is 4 will be described with reference to Figs. 23A to 24. Figs. 23A and 23B are diagrams illustrating states of the configuration of the control circuits of Fig. 22A at certain timing. Fig. 24 is a diagram illustrating a timing chart. To be more precise, Fig. 23A is a diagram illustrating states of the control circuits at timing 1 indicated in Fig. 24 and Fig. 23B is a diagram illustrating states of the control circuits at timing 2 and timing 3 indicated in Fig. 24.

In Figs. 23A and 23B, a numeral in each of circles and ellipses represents a value held by the corresponding constituent. Now, a description will be given below with reference to Figs. 23A and 23B. Fig. 23A is the diagram illustrating states of the respective constituents at the timing indicated by the timing 1 in Fig. 24. The Q terminal of each FF in the shift register 2201 has the value "0". Meanwhile, the counter and the counter latch in the control circuit for each heater also have the value "0". The value of the counter maximum value 2203 is set to 3 since the heater driving time division number is 4.

Fig. 23B is the diagram illustrating states of the respective constituents at the timing 2 and the timing 3 in Fig. 24, or more specifically, the states of the respective constituents at the rising edge of the load signal. The timing 2 is the timing after toggling the clk signal 512 times since the timing 1, while the timing 3 is the timing after toggling the clk signal 512 times since the timing 2. Since the value "1" is inputted to the D terminal of the FF511 in the shift register 2201, the Q terminals of all of the FFs in the shift register outputs the value "1" after toggling the clk signals 512 times, that is, as many times as the number of stages in the shift register 2201. The counters in the respective heater control circuits have values of 0, 1, 2, 3, 0, 1, ..., 1, 2, and 3 in the order from the heater 0 immediately before the rise of the load signal. The values of all the counters return to 0 along with the rise of the load signal. The counter latch in each heater control circuit latches the value of the corresponding counter before the return to 0. Here, the value of the counter latch is described in such a way as to transition from any one of the values 0 to 3 to 0 in Fig. 23B, the same value will be latched at the timing 3 (unlike the description in Fig. 23B) because the value latched at the timing 2 is retained without change. The shift register 2201 and the counter in each of the heater control circuits perform the operations from the timing 2 to the timing 3 which are the same as the operations from the timing 1 to the timing 2.

Meanwhile, the heat signal takes the value "1" four times from the timing 2 to the timing 3 since the heater driving time division number is 4. The block counter 2205 is incremented by 1 each time the heat signal rises. The comparator 2206 outputs the value "1" in the case where the value of the counter latch 2204 in each heater control circuit is equal to the value of the corresponding block counter 2205. The value "1" is applied to the SW connected to each heater control circuit in which the comparator outputted the value "1", whereby the corresponding heater is driven.

<Second Example>

Fig. 22B is a diagram illustrating an example of the control circuits for the SWs for controlling the currents flowing through the respective heaters in the case where a heater which is no longer capable of generating the UFBs (hereinafter referred to as a "disabled heater") is included.

In the case of dynamically controlling the number of the heaters to be driven simultaneously while excluding the heater that cannot generate the film boiling, the heaters to which the energy is applied simultaneously at an arbitrary time division number are controlled in an equalized manner. By driving the heaters while using the arbitrary time division number, it is possible to generate the UFBs with power consumption corresponding to a power supply system. Moreover, by driving the heaters in accordance with the time division while excluding the disabled heater, it is possible to suppress a power saving variation during the time division operation. Now, the example will be specifically described below with reference to the drawings.

As with the first example, the control circuit for each of the SWs corresponding to the heaters 1 to 511 includes the shift register 2201, the counter 2202, the counter latch 2204, and the comparator 2206. Moreover, each control circuit for the SW includes a data latch 2251 and an AND gate 2252. Further more, each control circuit is connected to the counter maximum value 2203 and to the block counter 2205. The counter 2202, the counter latch 2204, the comparator 2206, the counter maximum value 2203, and the block counter 2205 perform the same operations as those in Fig. 22A and explanations thereof will be omitted.

However, a data signal is connected to the D terminal of the FF511 in the shift register 2201. When the disabled heater is defined as a heater n, the data signal is designed such that the value "0" is outputted from the Q terminal of the FFn when the clk signal is toggled as many times as the number of the stages in the shift register 2201. In this embodiment, the disabled heater is assumed to be known in advance and the data signal is assumed to be outputted based on this known information.

A configuration in the case of the heater 0 will be described below as an example. The Q terminal of the FF0 in the shift register 2201 is connected as an input signal to the data latch 2251. When the load signal becomes "1", the value of the Q terminal is latched to inside. The AND gate 2252 is an AND gate including three input terminals. The output from the comparator 2206, an output from the data latch 2251, and the heat signal are connected to the input terminals of the AND gate 2252. An output terminal of the AND gate 2252 is connected to the SW. Although Fig. 22B also illustrates the control circuits for 512 heaters, the number of the heaters may be different as discussed in conjunction with Fig. 22A.

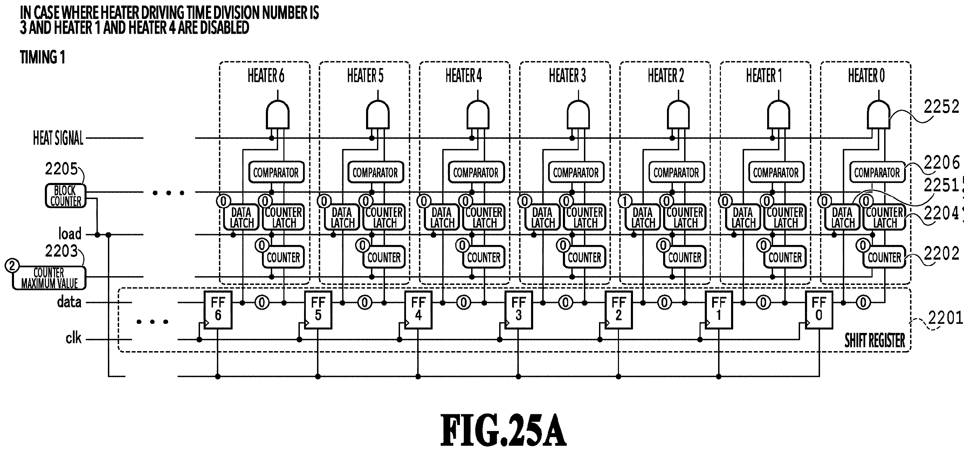

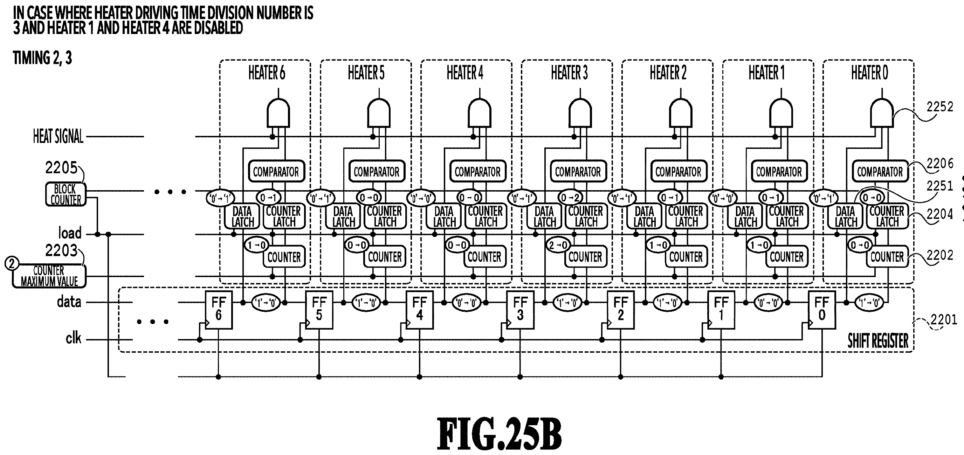

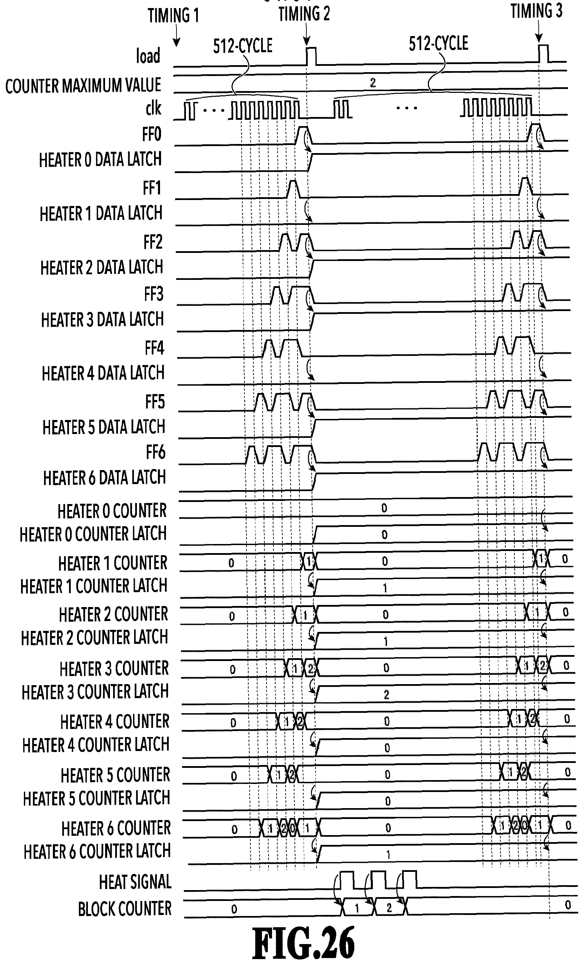

Next, an example of the configuration of the control circuits of Fig. 22B applicable to a case where the heater 1 and the heater 4 are the disabled heaters and the heater driving time division number is 3 will be described with reference to Figs. 25A to 26. Figs. 25A and 25B are diagrams illustrating states of the configuration of the control circuits of Fig. 22B at certain timing. Fig. 26 is a diagram illustrating a timing chart. To be more precise, Fig. 25A is a diagram illustrating states of the control circuits at timing 1 indicated in Fig. 26 and Fig. 25B is a diagram illustrating states of the control circuits at timing 2 and timing 3 indicated in Fig. 26.

In Figs. 25A and 25B, a numeral in each of circles and ellipses represents a value held by the corresponding constituent. Now, a description will be given below with reference to Figs. 25A and 25B. Fig. 25A is the diagram illustrating states of the respective constituents at the timing indicated by the timing 1 in Fig. 26. The Q terminal of each FF in the shift register 2201 has the value "0". Meanwhile, the counter and the counter latch in the control circuit for each heater also have the value "0". The value of the counter maximum value 2203 is set to 2 since the heater driving time division number is 3.

Fig. 25B is the diagram illustrating states of the respective constituents at the timing 2 and the timing 3 in Fig. 26, or more specifically, the states of the respective constituents at the rising edge of the load signal. The timing 2 is the timing after toggling the clk signal 512 times since the timing 1, while the timing 3 is the timing after toggling the clk signal 512 times since the timing 2. The data signal deals with the disabled heaters. The Q terminals of the FF1 and the FF4 output the value "0" after toggling the clk signals 512 times, that is, as many times as the number of stages in the shift register 2201. Meanwhile, the Q terminals of the remaining FFs are configured to output the value "1". The counters in the respective heater control circuits have values of 0, 1, 2, 0, ..., 0, and 1 in the order from the heater 0 immediately before the rise of the load signal. The values of all the counters return to 0 along with the rise of the load signal. The counter latch in each heater control circuit latches the value of the corresponding counter before the return to 0. Here, the value of the counter latch is described in such a way as to transition from any one of the values 0 to 2 to 0 in Fig. 25B, the same value will be latched at the timing 3 (unlike the description in Fig. 25B) since the value latched at the timing 2 is retained without change.

The shift register 2201 and the counter in each of the heater control circuits perform the operations from the timing 2 to the timing 3 which are the same as the operations from the timing 1 to the timing 2. Meanwhile, the heat signal takes the value "1" three times from the timing 2 to the timing 3 since the heater driving time division number is 3. The block counter 2205 is incremented by 1 each time the heat signal rises. The comparator outputs the value "1" in the case where the value of the counter latch in each heater control circuit is equal to the value of the corresponding block counter 2205. Then, the value "1" is applied to the SW corresponding to the heater which is not a disabled heater, or in other words, to the SW connected to each heater control circuit in which the data latch 2251 outputted the value "1".

As described above, the control circuits of this embodiment include the shift register provided with the flip-flop circuits in the same number as the heaters, a counter maximum value holding unit that holds the time division number inside, and the block counter in which the counter is incremented by 1 each time the energy is applied. Moreover, each control circuit includes the load signal which outputs the H level logically at a point of completion of data transfer to the shift register, the heat signal which outputs the H level at a point of application of the energy to the heater, and a heater control unit that control application and non-application of the energy to each heater. The heater control unit includes the counter, which is incremented in the case where the output from the flip-flop circuit corresponding to the heater in the shift register is the H level, and returns to 0 in the case where the count value reaches the counter maximum value. In addition, each control circuit includes the data latch which latches the output from the flip-flop circuit corresponding to the heater in the shift register in the case where the load signal becomes the H level, and the counter latch that latches the value of the counter in the case where the load signal becomes the H level. Moreover, each control circuit includes the comparator which compares the value of the block counter with the value of the counter latch and outputs the H level in the case where these values are equal. Furthermore, each control circuit includes the AND gate to which the heat signal, the output form the data latch, and the output from the comparator are inputted. The output from the AND gate is connected to the switch that controls the drive of the heater. Meanwhile, the data to be inputted to the shift register is configured such that the L level is logically outputted from the flip-flop circuit corresponding to the heater that cannot generate the film boiling in the case of completion of the data input corresponding to the number of stages in the shift register.

According to this embodiment, the heaters to which the energy is applied simultaneously at the arbitrary time division number can be controlled in an equalized manner. By driving the heaters while using the arbitrary time division number, it is possible to generate the UFBs with power consumption corresponding to the power supply system. Moreover, by driving the heaters in accordance with the time division while excluding the disabled heater, it is possible to suppress the power saving variation during the time division operation.

«Fifth Embodiment»

The voltage of the voltage pulse to be inputted to the heater is preferably set constant. A variation in voltage may change conditions at the time of generation of the film boiling, and may lead to a failure to generate the UFBs stably. A constant-voltage power supply may be used in some cases in order to drive the heaters. A power supply unit for driving the heaters preferably has a large power supply capacity so as to drive all the heaters simultaneously. Nonetheless, in the light of the cost or the size, it is possible to use a power supply unit with a smaller power supply capacity by limiting the number of the heaters to be driven simultaneously. In this case, it is possible to control the simultaneous drive by dividing all the heaters into areas and sequentially driving the heaters on the area basis.

Although the use of the constant-current power supply makes it possible to supply the constant voltage, the occurrence of a steep and large change in load may cause a variation in the supply voltage. Here, in the case where the multiple heaters are driven simultaneously, the multiple heaters may transition from a state where the heaters are turned off at the same time to a state where the heaters are turned on at the same time, whereby the steep and large change in load occurs as a consequence. The change in the power supply voltage may lead to a situation where the energy inputted to the heaters deviates from an estimated level, and may preclude stable generation of the UFBs. This embodiment will describe an example that suppresses such a steep and large change in load and to make a supply voltage constant.

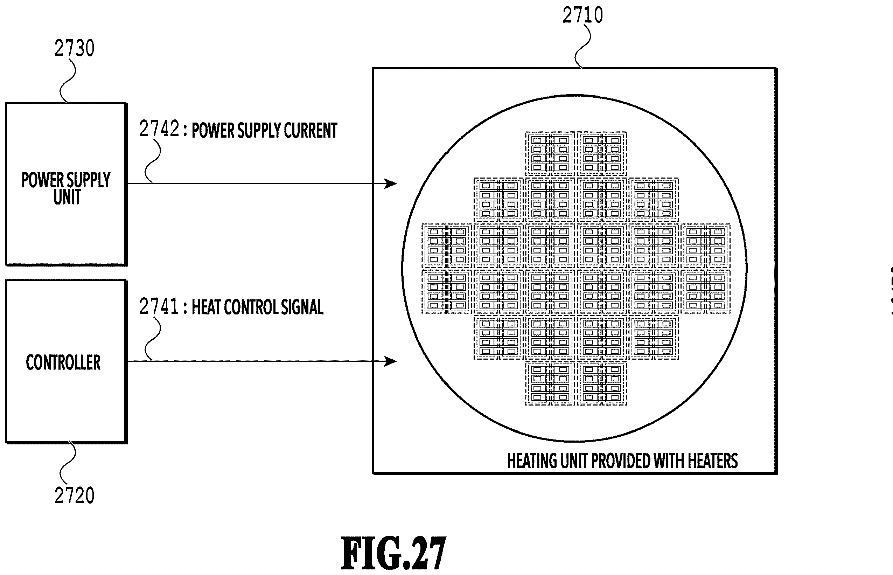

Fig. 27 is a diagram illustrating a configuration to drive a heating unit 2710 provided with multiple heaters. The heating unit 2710 may be formed from a single element substrate 12. Alternatively, the heating unit 2710 may be formed from multiple element substrates 12. A controller 2720 and a power supply unit 2730 are connected to the heating unit 2710.

Each heater is turned on and off by the control of the controller 2720. For example, the use of the switch (SW) according to any of the above-described embodiments makes it possible to turn the heater on and off. The heating unit 2710 provided with the heaters can perform control of groups of the heaters each including several heaters. The control on the group basis is enabled by locating a switch in a wiring region shared by the groups, for instance. In this way, it is possible to control on and off depending on the groups by means of the control using the controller 2720.

A power supply having a power supply capacity that enables supply of the equivalent amount of currents is required in order to simultaneously drive the heaters. However, a power supply with a large capacity involves a large size and a high cost. Accordingly, the control is performed in this example while limiting the number of heaters to be driven simultaneously. Meanwhile, in order to realize the stable film boiling, the control is performed in such a way as to make the power supply voltage to the heaters constant while suppressing the steep and large change in load.

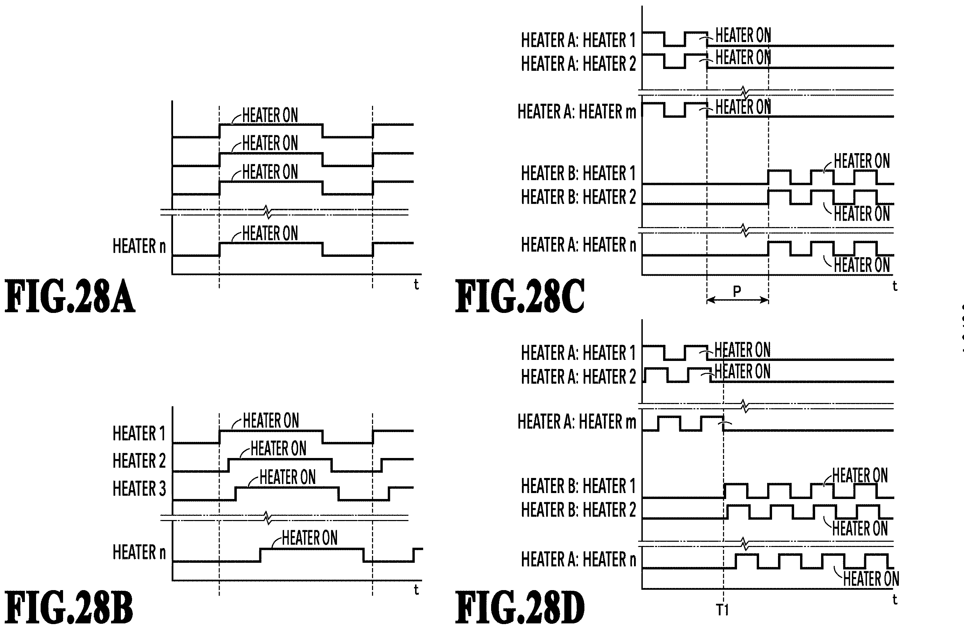

Figs. 28A to 28D are timing charts describing modes of driving the heaters. Fig, 28A shows a comparative example in which timing to turn on and off is not adjusted in particular. In the case of generating the UFBs by generating the film boiling, the voltage pulse is applied to the heater and the heater is repeatedly turned on and off as described above. In other words, the heater is controlled in such a way as to repeat cycles each including on and off actions. In this instance, if all the heaters in a certain control group are simultaneously turned on at initial timing in each cycle, an all-off state is switched to an all-on state because all the heaters are turned off immediately before being turned on. As a consequence, the load may fluctuate significantly and instantaneously from the viewpoint of the power supply, thereby causing a variation in heater power supply voltage.

Fig. 28B is a diagram illustrating an example of the control of this embodiment. As illustrated in Fig. 28B, the heaters are controlled such that time points to start each cycle including the on and off actions are slightly delayed among the heaters. By delaying the drive timing through the SWs, for example, a situation where all the heaters are turned on is avoided. Accordingly, it is possible to suppress the steep change in power supply voltage. Alternatively, the same effect can also be obtained by delaying the timing to turn on the heaters within each cycle instead of delaying the timing of each cycle.

Fig. 28C is a comparative example in which multiple heaters in a certain area are formed into a group. In other words, Fig. 28C illustrates the example of not adjusting the timing to turn on and off. Fig. 28C involves a section P in which all the heaters are turned off after turning off the heaters in a group A and before turning on the heater in a different group B. In this case as well, the all-off state is switched to the all-on state because all the heaters are turned off immediately before being turned on. Accordingly, the load is reduced in the case where the heaters are turned off, and is suddenly increased in the case where the heaters are turned on later from the viewpoint of the power supply. This is equivalent to the significant and instantaneous fluctuation of the load when viewed from the power supply, and the heater power supply voltage also varies as a consequence.

Fig. 28D is a diagram illustrating another example of the control of this embodiment. As illustrated in Fig. 28D, in a case of turning off the group A and then turning on the different group B, a time period to turn all the heaters off is reduced by starting an on operation of the group B immediately after turning the group A off. In this way, it is possible to suppress the steep change in the power supply voltage. In the example of Fig. 28D, the heaters in each group are controlled in such a way as to delay the timing to turn the respective heaters on and off. Moreover, an interval between the heater to be turned on and off at the end in the group A and the heater to be turned on and off in the beginning in the group B is minimized. As described above, in the case of turning off the drive of a certain area and then turning on the drive of a different area, it is possible to suppress the steep change from the viewpoint of the power supply by turning off the drive of the certain area and turning on the different area immediately after the turning off.

A reason for changing the timing to drive the heaters on the area basis will be described. If all the heaters arranged in the T-UFB generating unit 300 are continuously driven at the same drive timing, the T-UFB generating unit 300 may be divided into an area where a water temperature rises easily and an area where the water temperature does not rise easily. As a result, such a change in condition of the water temperature may lead to instability in generation of the film boiling. In this regard, it is possible to even out the water temperature by changing the frequency to drive the heaters depending on the areas in such a way as to reduce the frequency to drive the area where the temperature rises easily.

«Sixth Embodiment»

This embodiment will describe an example of dividing the element substrate 12 into multiple areas. Multiple heaters are arranged in each area. This embodiment will further describe an example to set driving conditions suitable for each area in a case where the suitable driving conditions vary due to the shape of the element substrate 12, the positions of the heaters, the time, and other factors. For instance, a driving division number of the heater drive and a driving cycle are changed depending on the areas.

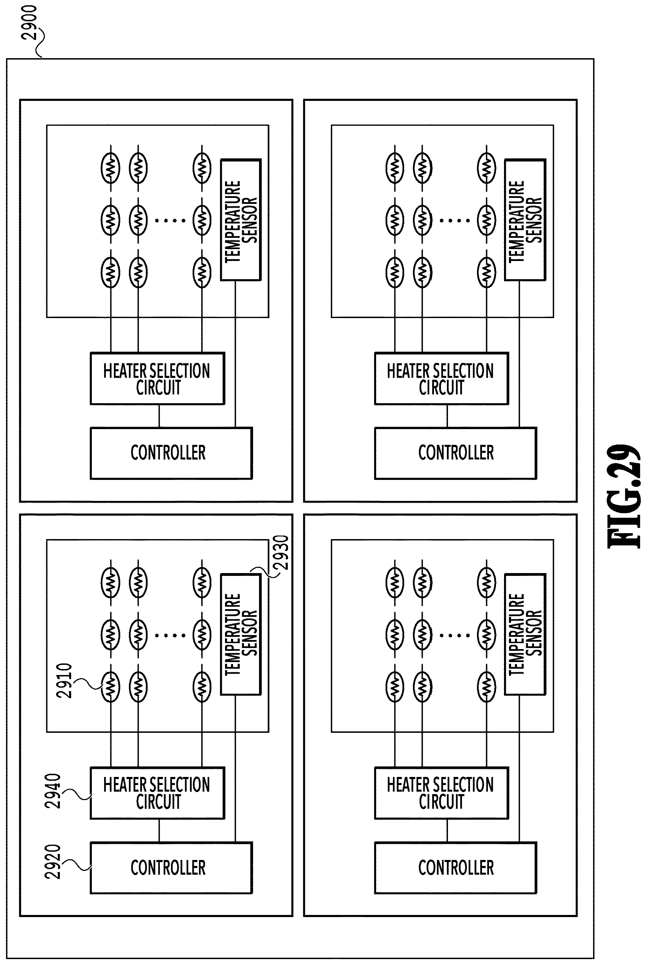

Fig. 29 is a diagram illustrating an example of a semiconductor substrate 2900 of this embodiment. As illustrated in Fig. 29, the semiconductor substrate 2900 is divided into multiple areas. Although this example describes a case of dividing the semiconductor substrate 2900 into four areas for the sake of explanation, the number of division may be dynamically changed. For instance, two or more areas out of the areas illustrated in Fig. 29 can also be treated collectively as one area. Heaters 2910, and a temperature sensor 2930 configured to detect temperatures of the heaters are arranged in each area. Moreover, a heater selection circuit 2940 provided with a not-illustrated counter and configured to select the heater to be driven, and a controller 2920 configured to transmit a count signal to the heater selection circuit 2940 and to receive a feedback from the temperature sensor are arranged in each area. The controller 2920 can perform control in such a way as to retain the temperature within a certain range at the time of driving the heaters by monitoring the temperature of each area with the corresponding temperature sensor 2930 and dynamically changing a driving frequency and the driving division number of the heaters in accordance with a monitored value. As discussed in the fifth embodiment, the T-UFB generating unit 300 may be divided into the area where the water temperature rises easily and the area where the water temperature does not rise easily depending on the layout of the heaters disposed in the T-UFB generating unit 300. As a result, the change in condition of the water temperature may possibly lead to instability in generation of the film boiling. In this regard, as a consequence of detecting the temperatures of the heaters with the temperature sensor 2930 and controlling in such a way as to retain the temperatures within the certain range at the time of driving the heaters, it is not necessary to provide a separate heating unit for the purpose of heat retention. In this way, the UFBs can be generated while suppressing the power consumption required for the heat retention.

According to this disclosure, the drive of the heaters can be efficiently and effectively controlled.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An ultrafine bubble generating apparatus (300) configured to generate ultrafine bubbles (11) by bringing a liquid (W) into film boiling, comprising:

   a detection unit (1610) configured to detect generation of the film boiling.

2. The ultrafine bubble generating apparatus according to claim 1, further comprising:

   a heater configured to generate the film boiling, wherein
   the detection unit includes a sensor located near the heater.

3. The ultrafine bubble generating apparatus according to claim 2, further comprising:

   a substrate including a plurality of the heaters, wherein
   the sensors are arranged at positions on the substrate corresponding to the plurality of the heaters, respectively.

4. The ultrafine bubble generating apparatus according to claim 2, further comprising:

   a substrate including a plurality of the heaters, wherein
   the sensors are arranged at positions on the substrate between the plurality of the heaters.

5. The ultrafine bubble generating apparatus according to any one of claims 2 to 4, wherein the sensor is arranged on an opposite side of a side where the liquid is present relative to the heater.

6. The ultrafine bubble generating apparatus according to any one of claims 2 to 4, wherein the sensor is arranged at a position opposed to the heater while interposing the liquid in between.

7. The ultrafine bubble generating apparatus according to any one of claims 2 to 6, wherein the detection unit detects generation of the film boiling by causing the sensor to detect a temperature attributed to heat generation by the heater.

8. The ultrafine bubble generating apparatus according to claim 7, wherein the detection unit detects generation of the film boiling by obtaining a singularity on a profile indicating temperatures at respective time points of the detection.

9. The ultrafine bubble generating apparatus according to any one of claims 2 to 6, wherein the detection unit detects generation of the film boiling by causing the sensor to detect a pressure.

10. The ultrafine bubble generating apparatus according to claim 9, wherein the detection unit detects the pressure by using a sound wave.

11. The ultrafine bubble generating apparatus according to claim 9 or 10, wherein the detection unit detects generation of the film boiling by obtaining a singularity on a profile indicating the pressures at respective time points detected with the sensor.

12. The ultrafine bubble generating apparatus according to any one of claims 2 to 11, further comprising:

   a control unit configured to derive information on energy at time of generation of the film boiling detected by the detection unit and to control energy to be inputted to the heater based on the information, wherein
   the energy to be inputted to the heater is larger than the energy at the time of generation of the film boiling detected by the detection unit and smaller than 3 times of the energy at the time of generation of the film boiling.

13. The ultrafine bubble generating apparatus according to any one of claims 2 to 11, further comprising:

   a control unit configured to drive information on energy at time of generation of the film boiling detected by the detection unit and to control energy to be inputted to the heater based on the information, wherein
   the energy to be inputted to the heater is larger than the energy at the time of generation of the film boiling detected by the detection unit and smaller than 1.3 times of the energy at the time of generation of the film boiling.

14. A controlling method of a ultrafine bubble generating apparatus (300) configured to generate ultrafine bubbles (11) by bringing a liquid (W) into film boiling while using a heater, comprising:

detecting generation of the film boiling;
deriving information on energy at time of the detected generation of the film boiling; and
controlling energy to be inputted to the heater based on the information.

LIQUID W

DEGASSED
LIQUID W

GAS G

LIQUID W IN WHICH
GAS IS DISSOLVED

UFB-CONTAINING
LIQUID W

UFB-CONTAINING
LIQUID W

PURIFIED
UFB-CONTAINING
LIQUID W

PURIFIED
UFB-CONTAINING
LIQUID W

100    200    600    CONTROL UNIT    300    400    500

1

**FIG.1**

EP 3 817 510 A1

**FIG.2**

# FIG.3A

# FIG.3B

**FIG.4**

**FIG.5A**

**FIG.5B**

FILM BOILING
BUBBLE INTERNAL PRESSURE

FILM BOILING
BUBBLE VOLUME

ATMOSPHERIC PRESSURE

TIME

TIMING 1    TIMING 2    TIMING 3

VOLTAGE

TIME

FILM BOILING THRESHOLD ENERGY

**FIG.6A**

11
13
10    12

TIMING 1    TIMING 2    TIMING 3

**FIG.6B**

**FIG.7A**

**FIG.7B**

**FIG.7C**

**FIG.7D**

EP 3 817 510 A1

**FIG.8A**

300
11B
15
302
3
301
W
303
10
13
12

**FIG.8B**

300
11B
15
302
3
301
W
303
10
13
12

**FIG.8C**

300
15
302
3
301
W
303
10
13
11B
12

**FIG.9A**

**FIG.9B**

**FIG.9C**

**FIG.10A**

**FIG.10B**

FIG.11A

FIG.11B

FIG.11C

**FIG.12A**

**FIG.12B**

EP 3 817 510 A1

FIG.13A

**FIG.13B**

1201  1202

1231  1232

1241a  1061  1241b  1401
1242a  1062  1242b  1402
1243a  1063  1243b  1403
1244a  1064  1244b  1404

# FIG.14A

HEATING ELEMENT DRIVING SW LOGIC WAVEFORM

L  H  SW1401

SW1402

SW1403

SW1404

TIME

# FIG.14B

12

1201  1202  1421

# FIG.14C

APPLICATION OF VOLTAGE PULSE TO HEATER

**FIG.15A**

**FIG.15B**

**FIG.15C**

**FIG.15D**

W    13

1620    10    308    310
   308    1610

**FIG.16A**

W    1620    1610    308

10    308    310

**FIG.16B**

1202

1232

1061   1062   1063   1064

XVIIB            XVIIB

1201

1231

## FIG.17A

1061   1062   1063   1604

1610              1610

## FIG.17B

**FIG.18A**

**FIG.18B**

1910

1920

1913  1911 : HEATERS

CONTROLLER

1931
: SETTING I/F

1912

COUNTER

HEATER SELECTION CIRCUIT

SEMICONDUCTOR SUBSTRATE
PROVIDED WITH HEATERS

1930
: HEAT AND COUNTER
CONTROL SIGNAL

## FIG.19A

1910

1920

1913  1911 : HEATERS

CONTROLLER

1931
: SETTING I/F

COUNTER

HEATER SELECTION CIRCUIT

SEMICONDUCTOR SUBSTRATE
PROVIDED WITH HEATERS

1932
: COUNT VALUE

1921

## FIG.19B

1910

1920

1913  1911 : HEATERS

CONTROLLER

DRIVEN
HEATER
CONTROL
CIRCUIT

1931
: SETTING I/F

HEATER
SELECTION CIRCUIT

SEMICONDUCTOR SUBSTRATE
PROVIDED WITH HEATERS

1922

1933
: DRIVEN HEATER
SELECTION SIGNAL

**FIG.19C**

1910

1920

1931
: SETTING I/F

1913  1911 : HEATERS

CONTROLLER

1934 : HEAT
CONTROL SIGNAL

HEATER
SELECTION CIRCUIT

COUNTER

SEMICONDUCTOR SUBSTRATE
PROVIDED WITH HEATERS

1912

1935
: COUNTER CONTROL
SIGNAL OR DRIVEN HEATER
SELECTION SIGNAL

**FIG.19D**

EP 3 817 510 A1

| COUNT VALUE | DRIVEN HEATER SELECTION NUMBER |
|:-----------:|:------------------------------:|
| 0 | 1 |
| 1 | 6 |
| 2 | 7 |
| 3 | 3 |
| 4 | 2 |
| 5 | 5 |
| 6 | 0 |
| 7 | 4 |

DRIVEN HEATER SELECTION TABLE

# FIG.20A

HEAT AND COUNTER DRIVE SIGNAL

COUNTER  0  1  2  3  4  5  6  7  0  1  2  3

SETTING VALUE BY SETTING I/F  A  A'

LATCHED SETTING VALUE  A  A'

# FIG.20B

**HEATER CODES**

| Heater Code | ID |
|---|---|
| 0 | ID 000 |
| 1 | ID 001 |
| 2 | ID 010 |
| 3 | ID 011 |
| 4 | ID 100 |
| 5 | ID 101 |
| 6 | ID 110 |
| 7 | ID 111 |
| 8 | ID 000 |
| 9 | ID 001 |
| 10 | ID 010 |
| 11 | ID 011 |
| 12 | ID 100 |
| 13 | ID 101 |
| 14 | ID 110 |
| 15 | ID 111 |

**FIRST DRIVING EXAMPLE**

| HEATER ID bit2 | bit1 | bit0 | COUNTER bit2 | bit1 | bit0 |
|---|---|---|---|---|---|
| 0 | 0 | 0 | 0 | 0 | 0 |
| 0 | 0 | 1 | 0 | 0 | 1 |
| 0 | 1 | 0 | 0 | 1 | 0 | 2101
| 0 | 1 | 1 | 0 | 1 | 1 |
| 1 | 0 | 0 | 1 | 0 | 0 |
| 1 | 0 | 1 | 1 | 0 | 1 |
| 1 | 1 | 0 | 1 | 1 | 0 |
| 1 | 1 | 1 | 1 | 1 | 1 |

**SECOND DRIVING EXAMPLE**

| HEATER ID bit2 | bit1 | bit0 | COUNTER bit2 | bit1 | bit0 |
|---|---|---|---|---|---|
| 0 | 0 | 0 | 0 | 0 | 0 |
| 0 | 0 | 1 | 0 | 0 | 1 |
| 0 | 1 | 0 | 0 | 1 | 0 | 2102
| 0 | 1 | 1 | 0 | 1 | 1 |
| 1 | 0 | 0 | 1 | 0 | 0 |
| 1 | 0 | 1 | 1 | 0 | 1 |
| 1 | 1 | 0 | 1 | 1 | 0 |
| 1 | 1 | 1 | 1 | 1 | 1 |

**THIRD DRIVING EXAMPLE**

| HEATER ID bit2 | bit1 | bit0 | COUNTER bit2 | bit1 | bit0 |
|---|---|---|---|---|---|
| 0 | 0 | 0 | 0 | 0 | 0 |
| 0 | 0 | 1 | 0 | 0 | 1 |
| 0 | 1 | 0 | 0 | 1 | 0 | 2103
| 0 | 1 | 1 | 0 | 1 | 1 |
| 1 | 0 | 0 | 1 | 0 | 0 |
| 1 | 0 | 1 | 1 | 0 | 1 |
| 1 | 1 | 0 | 1 | 1 | 0 |
| 1 | 1 | 1 | 1 | 1 | 1 |

**FIG.21**

FIG.22A

**FIG.22B**

EP 3 817 510 A1

**FIG.23A**

EP 3 817 510 A1

**FIG.23B**

**FIG.24**

EP 3 817 510 A1

IN CASE WHERE HEATER DRIVING TIME DIVISION NUMBER IS
3 AND HEATER 1 AND HEATER 4 ARE DISABLED

TIMING 1

HEATER 6  HEATER 5  HEATER 4  HEATER 3  HEATER 2  HEATER 1  HEATER 0

HEAT SIGNAL

2205
BLOCK
COUNTER

load

2203
② COUNTER
MAXIMUM VALUE

data

clk

2252

COMPARATOR  COMPARATOR  COMPARATOR  COMPARATOR  COMPARATOR  COMPARATOR  COMPARATOR

2206
2251

DATA COUNTER  DATA COUNTER  DATA COUNTER  DATA COUNTER  DATA COUNTER  DATA COUNTER  DATA COUNTER
LATCH LATCH  LATCH LATCH  LATCH LATCH  LATCH LATCH  LATCH LATCH  LATCH LATCH  LATCH LATCH

2204

COUNTER  COUNTER  COUNTER  COUNTER  COUNTER  COUNTER  COUNTER

2202

FF 6  FF 5  FF 4  FF 3  FF 2  FF 1  FF 0

2201

SHIFT REGISTER

FIG.25A

EP 3 817 510 A1

IN CASE WHERE HEATER DRIVING TIME DIVISION NUMBER IS
3 AND HEATER 1 AND HEATER 4 ARE DISABLED

TIMING 2, 3

FIG.25B

FIG.26

2730

2710

2742 : POWER SUPPLY CURRENT

POWER SUPPLY UNIT

2741 : HEAT CONTROL SIGNAL

CONTROLLER

2720

HEATING UNIT PROVIDED WITH HEATERS

**FIG.27**

FIG.28A

FIG.28B

FIG.28C

FIG.28D

EP 3 817 510 A1

**FIG.29**

EP 3 817 510 A1

Europäisches
Patentamt

European
Patent Office

Office européen
des brevets

# EUROPEAN SEARCH REPORT

Application Number

EP 20 20 4936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2019 042732 A (CANON KK) 22 March 2019 (2019-03-22) * claim 1 * | 1,14 | INV. H05B3/26 B01B1/00 F24H1/50 |
| X | US 2005/179741 A1 (SILVERBROOK KIA [AU] ET AL) 18 August 2005 (2005-08-18) | 1,14 | |
| Y | * paragraphs [0334], [0501] * | 5,6,9-11 | |
| A | | 12,13 | |
| X | JP 2008 188838 A (CANON KK) 21 August 2008 (2008-08-21) | 1-3,7,8, 14 | |
| A | * paragraph [0020]; figures 3,7 * | 4 | |
| Y | JP 2008 157090 A (TOYOTA MOTOR CORP) 10 July 2008 (2008-07-10) * paragraph [0024]; figure 5 * | 9,11 | |
| Y | JP S49 2571 B1 (.) 21 January 1974 (1974-01-21) * claim 1; figure 3 * | 6,9,10 | |
| Y | US 6 252 616 B1 (OKAZAKI TAKESHI [JP] ET AL) 26 June 2001 (2001-06-26) * figure 45 * | 5 | TECHNICAL FIELDS SEARCHED (IPC) F17C B01B H05B B41J |

The present search report has been drawn up for all claims

| Place of search | Date of completion of the search | Examiner |
|---|---|---|
| Munich | 5 March 2021 | Garcia Congosto, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 4936

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2021

| Patent document cited in search report | | Publication date | Patent family member(s) | | | Publication date |
|---|---|---|---|---|---|---|
| JP 2019042732 | A | 22-03-2019 | AU | 2018323492 | A1 | 12-03-2020 |
| | | | BR | 112020003906 | A2 | 08-09-2020 |
| | | | CN | 111050925 | A | 21-04-2020 |
| | | | EP | 3658293 | A1 | 03-06-2020 |
| | | | JP | 2019042732 | A | 22-03-2019 |
| | | | KR | 20200036900 | A | 07-04-2020 |
| | | | SG | 11202001745U | A | 30-03-2020 |
| | | | US | 2020254468 | A1 | 13-08-2020 |
| US 2005179741 | A1 | 18-08-2005 | US | 2005179741 | A1 | 18-08-2005 |
| | | | US | 2008111857 | A1 | 15-05-2008 |
| JP 2008188838 | A | 21-08-2008 | NONE | | | |
| JP 2008157090 | A | 10-07-2008 | NONE | | | |
| JP S492571 | B1 | 21-01-1974 | NONE | | | |
| US 6252616 | B1 | 26-06-2001 | AU | 2480497 | A | 11-12-1997 |
| | | | CA | 2207236 | A1 | 07-12-1997 |
| | | | CN | 1172012 | A | 04-02-1998 |
| | | | DE | 69733980 | T2 | 23-02-2006 |
| | | | EP | 0811490 | A2 | 10-12-1997 |
| | | | ES | 2243969 | T3 | 01-12-2005 |
| | | | US | 6252616 | B1 | 26-06-2001 |
| | | | US | 6582065 | B1 | 24-06-2003 |

EPO FORM P0459

For more details about this annex : see Official Journal of the European Patent Office, No. 12/82

**REFERENCES CITED IN THE DESCRIPTION**

**Patent documents cited in the description**

- JP 2019042732 A